(19) Europäisches Patentamt
European Patent Office
Office européen des brevets

(11) **EP 4 589 347 A1**

(12) **EUROPEAN PATENT APPLICATION**

(43) Date of publication:
**23.07.2025 Bulletin 2025/30**

(21) Application number: **25152349.4**

(22) Date of filing: **16.01.2025**

(51) International Patent Classification (IPC):
**G02B 5/22** (2006.01)    **G02B 5/28** (2006.01)
**G02B 13/00** (2006.01)

(52) Cooperative Patent Classification (CPC):
**G02B 13/004; G02B 5/22; G02B 5/281;
G02B 5/282;** G02B 9/34

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.01.2024 US 202463622594 P**

(71) Applicant: **Largan Precision Co. Ltd.
Taichung City 408 (TW)**

(72) Inventors:
• **CHANG, Pei-Chi
408 Taichung City (TW)**
• **TSAI, Wen-Yu
408 Taichung City (TW)**
• **HONG, Yu Jie
408 Taichung City (TW)**
• **TENG, Chun-Hung
408 Taichung City (TW)**

(74) Representative: **Jakelski & Althoff
Patentanwälte PartG mbB
Patentanwälte
Partnerschaftsgesellschaft
Mollenbachstraße 37
71229 Leonberg (DE)**

(54) **OPTICAL LENS ASSEMBLY AND ELECTRONIC DEVICE**

(57) An optical lens assembly includes at least four optical lens elements. The at least four optical lens elements include, in order from an object side of the optical lens assembly to an image side thereof, a first optical lens element, a second optical lens element, a third optical lens element and a fourth optical lens element. The at least four optical lens elements include a blue-glass lens element, and a specific condition of a fifth arranging factor of the blue-glass lens element is satisfied.

EP 4 589 347 A1

Fig. 2

**Description**

**BACKGROUND**

Technical Field

The present disclosure relates to an optical lens assembly and an electronic device. More particularly, the present disclosure relates to an optical lens assembly and an electronic device that include a blue-glass lens element and can be used to filter out the near-infrared light.

Description of Related Art

In current, the method to filter out the near-infrared light of the optical lens assembly is to arrange a blue glass plate having a near-infrared light filtering coating membrane on the surface thereof in front of the image sensor so as to serve as a filter. The combined use of the near-infrared light filtering coating membrane and the blue glass material can reduce the interference in the optical imaging caused by the near-infrared light. However, when the near-infrared light is filtered out, the visible light will reflect back and forth among the near-infrared light filtering coating membrane, the blue glass plate and the image sensor. Further, because the reflected light incidents in the image sensor multiple times, the petal-shaped flares that are difficult to eliminate will be generated, resulting in a significant reduction in the imaging quality.

Accordingly, the blue glass plate and the near-infrared light filtering coating membrane disposed on the surface thereof is an important arrangement that cannot be changed easily, and thus if the shortcoming caused by the aforementioned arrangement wants to be solved, a new arrangement for filtering the near-infrared light needs to be developed.

**SUMMARY**

According to one aspect of the present disclosure, an optical lens assembly includes at least four optical lens elements. The at least four optical lens elements include, in order from an object side of the optical lens assembly to an image side thereof, a first optical lens element, a second optical lens element, a third optical lens element and a fourth optical lens element. The at least four optical lens elements include a blue-glass lens element, and when a first arranging factor of the blue-glass lens element is Fb1, and a fifth arranging factor of the blue-glass lens element is Fb5, the following conditions are satisfied: Fb1 ≤ 1.50; and 0.08 ≤ Fb5 ≤ 0.30.

According to the optical lens assembly of the aforementioned aspect, when a second arranging factor of the blue-glass lens element is Fb2, the following condition can be satisfied: Fb2 ≤ 0.30.

According to the optical lens assembly of the aforementioned aspect, when a third arranging factor of the blue-glass lens element is Fb3, the following condition can be satisfied: 0.50 ≤ Fb3 ≤ 2.00.

According to the optical lens assembly of the aforementioned aspect, when a fourth arranging factor of the blue-glass lens element is Fb4, the following condition can be satisfied: Fb4 ≤ 0.10.

According to the optical lens assembly of the aforementioned aspect, when an Abbe number of each of the at least four optical lens elements is V, the blue-glass lens element can satisfy the following condition: 20.00 ≤ V.

According to the optical lens assembly of the aforementioned aspect, when a comprehensive arranging factor of the blue-glass lens element is FB, the following condition can be satisfied: 0 < FB.

According to the optical lens assembly of the aforementioned aspect, when a wavelength at 50% transmittance of the optical lens assembly is Wt50, the following condition can be satisfied: 600 nm ≤ Wt50 ≤ 700 nm.

According to the optical lens assembly of the aforementioned aspect, the at least four optical lens elements can include a long-wavelength absorbing lens element.

According to the optical lens assembly of the aforementioned aspect, when a main arranging factor of the long-wavelength absorbing lens element is FA, the following condition can be satisfied: 0.50 ≤ FA.

According to the optical lens assembly of the aforementioned aspect, when a material arranging factor of the long-wavelength absorbing lens element is Fam, the following condition can be satisfied: 20.00 ≤ Fam ≤ 50.00.

According to the optical lens assembly of the aforementioned aspect, when a central thickness along an optical axis of the blue-glass lens element is CTB, and a central thickness along the optical axis of the long-wavelength absorbing lens element is CTA, the following condition can be satisfied: 1.00 ≤ CTB/CTA.

According to the optical lens assembly of the aforementioned aspect, when an average transmittance in a wavelength range of 600 nm - 650 nm of the optical lens assembly is T6065, the following condition can be satisfied: T6065 ≤ 60.00%.

According to the optical lens assembly of the aforementioned aspect, when an average transmittance in a wavelength range of 650 nm - 700 nm of the optical lens assembly is T6570, the following condition can be satisfied: T6570 ≤ 30.00%.

According to the optical lens assembly of the aforementioned aspect, when an average transmittance in a wavelength range of 700 nm - 1050 nm of the optical lens assembly is T70105, the following condition can be satisfied: T70105 ≤ 10.00%.

According to the optical lens assembly of the aforementioned aspect, when a transmittance at a wavelength of 850 nm of the optical lens assembly is T85, the following condition can be satisfied: T85 ≤ 10.00%.

According to the optical lens assembly of the aforementioned aspect, when a transmittance at a wavelength of 940 nm of the optical lens assembly is T94, the following condition can be satisfied: T94 ≤ 10.00%.

According to the optical lens assembly of the aforementioned aspect, when a transmittance at a wavelength of 1050 nm of the optical lens assembly is T105, the following condition can be satisfied: T105 ≤ 10.00%.

According to the optical lens assembly of the aforementioned aspect, the at least four optical lens elements can include a long-wavelength filtering lens element, and the long-wavelength filtering lens element can include a long-wavelength filtering coating membrane; and the long-wavelength filtering coating membrane can include at least one low refractive index layer and at least one high refractive index layer, and the long-wavelength filtering coating membrane can be formed by alternately stacking the at least one high refractive index layer and the at least one low refractive index layer.

According to the optical lens assembly of the aforementioned aspect, when a coating arranging factor of an object-side surface of the long-wavelength filtering lens element is FcR1, and a coating arranging factor of an image-side surface of the long-wavelength filtering lens element is FcR2, the following conditions can be satisfied: 5.00 ≤ FcR1; or 5.00 ≤ FcR2.

According to the optical lens assembly of the aforementioned aspect, the blue-glass lens element and the long-wavelength filtering lens element can be the same one of the optical lens elements, and when a merge arranging factor of an object-side surface of the blue-glass lens element is FbcR1, and a merge arranging factor of an image-side surface of the blue-glass lens element is FbcR2, the following conditions can be satisfied: 4.00 ≤ FbcR1; or 4.00 ≤ FbcR2.

According to the optical lens assembly of the aforementioned aspect, when a total number of layers of the long-wavelength filtering coating membrane is tLs, the following condition can be satisfied: tLs ≤ 80.

According to the optical lens assembly of the aforementioned aspect, when a total thickness of the long-wavelength filtering coating membrane is tTk, the following condition can be satisfied: 3000 nm ≤ tTk ≤ 10000 nm.

According to the optical lens assembly of the aforementioned aspect, when a total thickness of the high refractive index layer is HtTk, and a total thickness of the low refractive index layer is LtTk, the following condition can be satisfied: 1.00 ≤ LtTk/HtTk ≤ 2.00.

According to the optical lens assembly of the aforementioned aspect, when a refractive index of the high refractive index layer is NH, and a refractive index of the low refractive index layer is NL, the following condition can be satisfied: 0.50 ≤ NH-NL.

According to another aspect of the present disclosure, an electronic device includes the optical lens assembly of the aforementioned aspect.

According to further another aspect of the present disclosure, an optical lens assembly includes at least four optical lens elements. The at least four optical lens elements include, in order from an object side of the optical lens assembly to an image side thereof, a first optical lens element, a second optical lens element, a third optical lens element and a fourth optical lens element. The at least four optical lens elements include a blue-glass lens element, and when a fifth arranging factor of the blue-glass lens element is Fb5, and a comprehensive arranging factor of the blue-glass lens element is FB, the following conditions are satisfied: 0.05 ≤ Fb5 ≤ 0.40; and 0.50 ≤ FB.

According to the optical lens assembly of the aforementioned aspect, when an axial distance between an object-side surface of the first optical lens element and an image-side surface of a last one of the optical lens elements is TD, and a maximum image height of the optical lens assembly is ImgH, the following condition can be satisfied: 0 < TD/ImgH ≤ 2.00.

According to the optical lens assembly of the aforementioned aspect, when a first arranging factor of the blue-glass lens element is Fb1, the following condition can be satisfied: Fb1 ≤ 1.40.

According to the optical lens assembly of the aforementioned aspect, when a second arranging factor of the blue-glass lens element is Fb2, the following condition can be satisfied: Fb2 :5 0.25.

According to the optical lens assembly of the aforementioned aspect, when a third arranging factor of the blue-glass lens element is Fb3, the following condition can be satisfied: 0.60 :5 Fb3 ≤ 1.50.

According to the optical lens assembly of the aforementioned aspect, when a fourth arranging factor of the blue-glass lens element is Fb4, the following condition can be satisfied: Fb4 :5 0.08.

According to the optical lens assembly of the aforementioned aspect, when a total focal length of the optical lens assembly is F, and a maximum image height of the optical lens assembly is ImgH, the following condition can be satisfied: 2.50 ≤ F/ImgH ≤ 4.00.

According to the optical lens assembly of the aforementioned aspect, the at least four optical lens elements can include a long-wavelength filtering lens element, and the long-wavelength filtering lens element can include a long-wavelength filtering coating membrane; and the long-wavelength filtering coating membrane can include at least one low refractive index layer and at least one high refractive index layer, and the long-wavelength filtering coating membrane can be formed by alternately stacking the at least one high refractive index layer and the at least one low refractive index layer, wherein when a coating arranging factor of an object-side surface of the long-wavelength filtering lens element is FcR1, and a coating arranging factor of an image-side surface of the long-wavelength filtering lens element is FcR2, the following conditions can be satisfied: $7.50 \leq FcR1$; or $7.50 \leq FcR2$.

According to the optical lens assembly of the aforementioned aspect, when a maximum field of view of the optical lens assembly is FOV, the following condition can be satisfied: $0$ degrees $< FOV \leq 50.00$ degrees.

According to the optical lens assembly of the aforementioned aspect, when a total focal length of the optical lens assembly is F, and an axial distance between an object-side surface of the first optical lens element and an image-side surface of a last one of the optical lens elements is TD, the following condition can be satisfied: $0 < F/TD \leq 0.80$.

According to the optical lens assembly of the aforementioned aspect, the at least four optical lens elements can include a long-wavelength absorbing lens element, and when a main arranging factor of the long-wavelength absorbing lens element is FA, the following condition can be satisfied: $2.00 \leq FA \leq 5.00$.

According to the optical lens assembly of the aforementioned aspect, when a material arranging factor of the long-wavelength absorbing lens element is Fam, the following condition can be satisfied: $30.00 \leq Fam \leq 40.00$.

According to the optical lens assembly of the aforementioned aspect, when a central thickness along an optical axis of the blue-glass lens element is CTB, and a central thickness along the optical axis of the long-wavelength absorbing lens element is CTA, the following condition can be satisfied: $1.70 \leq CTB/CTA \leq 2.30$.

According to the optical lens assembly of the aforementioned aspect, when a first arranging factor of the blue-glass lens element is Fb1, a second arranging factor of the blue-glass lens element is Fb2, a third arranging factor of the blue-glass lens element is Fb3, a fourth arranging factor of the blue-glass lens element is Fb4, the fifth arranging factor of the blue-glass lens element is Fb5, the comprehensive arranging factor of the blue-glass lens element is FB, the central thickness along the optical axis of the blue-glass lens element is CTB, and the central thickness along the optical axis of the long-wavelength absorbing lens element is CTA, the following conditions can be satisfied: $1.05 \leq Fb1 \leq 1.15$; $0 \leq Fb2 \leq 0.15$; $0.95 \leq Fb3 \leq 1.06$; $0.02 \leq Fb4 \leq 0.045$; $0.115 \leq Fb5 \leq 0.12$; $3.00 \leq FB \leq \infty$; and $1.90 \leq CTB/CTA \leq 2.10$.

According to more another aspect of the present disclosure, an electronic device includes the optical lens assembly of the aforementioned aspect.

## BRIEF DESCRIPTION OF THE DRAWINGS

The present disclosure can be more fully understood by reading the following detailed description of the embodiment, with reference made to the accompanying drawings as follows:

Fig. 1 is a relationship diagram between transmittances and wavelengths of an optical lens assembly according to Comparative example 1.

Fig. 2 is a relationship diagram between transmittances and wavelengths of an optical lens assembly according to Example 1.

Fig. 3 is a relationship diagram between transmittances and wavelengths of an optical lens assembly according to Example 2.

## DETAIILED DESCRIPTION

According to one aspect of the present disclosure, an optical lens assembly includes at least four optical lens elements, and the at least four optical lens elements include, in order from an object side of the optical lens assembly to an image side thereof, a first optical lens element, a second optical lens element, a third optical lens element and a fourth optical lens element. The at least four optical lens elements include a blue-glass lens element. When a first arranging factor of the blue-glass lens element is Fb1, and a fifth arranging factor of the blue-glass lens element is Fb5, the following conditions are satisfied: $Fb1 \leq 1.50$; and $0.08 \leq Fb5 \leq 0.30$. Therefore, by adding the blue glass material to the optical lens element, the arrangement of the blue glass plate can be omitted so as to prevent the visible light from reflecting to the image sensor, and it is favorable for reducing the petal-shaped flares and enhancing the imaging quality. Further, by limiting the first arranging factor of the blue-glass lens element, a small magnification difference of the extreme optical paths located on the thicknesses of the blue-glass lens element can be ensured, and it is favorable for reducing the filtering difference of the near-infrared light between the maximum field of view on the optical path and the minimum field of view on the optical path of the blue-glass lens element. Furthermore, by satisfying the fifth arranging factor on the blue-glass lens element, an appropriate amount of near-infrared light can be filtered by the blue-glass lens element, and the best filtering effect of the near-infrared light can be achieved.

According to another aspect of the present disclosure, an optical lens assembly includes at least four optical lens elements, and the at least four optical lens elements include, in order from an object side of the optical lens assembly to an image side thereof, a first optical lens element, a second optical lens element, a third optical lens element and a fourth optical lens element. The at least four optical lens elements include a blue-glass lens element. When a fifth arranging factor of the blue-glass lens element is Fb5, and a comprehensive arranging factor of the blue-glass lens element is FB, the following conditions are satisfied: $0.05 \leq Fb5 \leq 0.40$; and $0.50 \leq FB$. Therefore, by adding the blue glass material to the optical lens element, the arrangement of the blue glass plate can be omitted so as to prevent the visible light from reflecting to the image sensor, and it is favorable for reducing the petal-shaped flares and enhancing the imaging quality. Further, by satisfying the fifth arranging factor on the blue-glass lens element, an appropriate amount of near-infrared light can be filtered by the blue-glass lens element, and the best near-infrared light filtering efficiency can be achieved. Furthermore, by designing an appropriate comprehensive arranging factor on the blue-glass lens element, the arranging requirements of the blue glass on the optical path in all fields of view of the optical lens element can be comprehensively considered, and it is favorable for optimizing the filtering effect of the near-infrared light.

According to the optical lens assembly of the present disclosure, when the fifth arranging factor of the blue-glass lens element is Fb5, the following condition can be satisfied: $0.07 \leq Fb5 \leq 0.35$. By satisfying the fifth arranging factor on the blue-glass lens element, an appropriate amount of near-infrared light can be filtered by the blue-glass lens element, and the best filtering effect of the near-infrared light can be achieved. Further, the following condition can be satisfied: $0.08 \leq Fb5 \leq 0.30$. Further, the following condition can be satisfied: $0.10 \leq Fb5 \leq 0.20$. Further, the following condition can be satisfied: $0.11 \leq Fb5 \leq 0.15$. Further, the following condition can be satisfied: $0.115 \leq Fb5 \leq 0.12$.

According to the optical lens assembly of the present disclosure, when the first arranging factor of the blue-glass lens element is Fb1, the following condition can be satisfied: $Fb1 \leq 1.40$. By limiting the first arranging factor on the blue-glass lens element, a small magnification difference of the extreme optical paths located on the thicknesses of the blue-glass lens element can be ensured, and it is favorable for reducing the filtering difference of the near-infrared light between the maximum field of view on the optical path and the minimum field of view on the optical path of the blue-glass lens element. Further, the following condition can be satisfied: $Fb1 \leq 1.30$. Further, the following condition can be satisfied: $0 < Fb1 \leq 1.20$. Further, the following condition can be satisfied: $1.00 \leq Fb1 \leq 1.15$. Further, the following condition can be satisfied: $1.05 \leq Fb1 \leq 1.15$.

According to the optical lens assembly of the present disclosure, when a second arranging factor of the blue-glass lens element is Fb2, the following condition can be satisfied: $Fb2 \leq 0.30$. By limiting the second arranging factor on the blue-glass lens element, a small value difference of the extreme optical paths located on the thicknesses of the blue-glass lens element can be ensured, and it is favorable for further reducing the filtering difference of the near-infrared light between the maximum field of view on the optical path and the minimum field of view on the optical path of the blue-glass lens element. Further, the following condition can be satisfied: $Fb2 \leq 0.25$. Further, the following condition can be satisfied: $Fb2 \leq 0.20$. Further, the following condition can be satisfied: $0 \leq Fb2 \leq 0.15$. Further, the following condition can be satisfied: $0.08 \leq Fb2 \leq 0.12$. Further, the following condition can be satisfied: $0.09 \leq Fb2 \leq 0.11$. Further, the following condition can be satisfied: $0.10 \leq Fb2 \leq 0.105$.

According to the optical lens assembly of the present disclosure, when a third arranging factor of the blue-glass lens element is Fb3, the following condition can be satisfied: $0.50 \leq Fb3 \leq 2.00$. By satisfying the third arranging factor on the blue-glass lens element, the overall optical paths in all fields of view and the thickness of the blue-glass lens element can be ensured to be similar, and it is favorable for enhancing the filtering effect of the near-infrared light of the blue-glass lens element in all fields of view. Further, the following condition can be satisfied: $0.60 \leq Fb3 \leq 1.50$. Further, the following condition can be satisfied: $0.80 \leq Fb3 \leq 1.20$. Further, the following condition can be satisfied: $0.90 \leq Fb3 \leq 1.10$. Further, the following condition can be satisfied: $0.93 \leq Fb3 \leq 1.07$. Further, the following condition can be satisfied: $0.95 \leq Fb3 \leq 1.06$. Further, the following condition can be satisfied: $0.99 \leq Fb3 \leq 1.01$.

According to the optical lens assembly of the present disclosure, when a fourth arranging factor of the blue-glass lens element is Fb4, the following condition can be satisfied: $Fb4 \leq 0.10$. By limiting the fourth arranging factor on the blue-glass lens element, the difference among the optical paths in all fields of view can be ensured to be small, and it is favorable for reducing the filtering difference of the near-infrared light of the blue-glass lens element in all fields of view. Further, the following condition can be satisfied: $Fb4 \leq 0.08$. Further, the following condition can be satisfied: $Fb4 \leq 0.06$. Further, the following condition can be satisfied: $0 \leq Fb4 \leq 0.05$. Further, the following condition can be satisfied: $0.02 \leq Fb4 \leq 0.045$.

According to the optical lens assembly of the present disclosure, when the comprehensive arranging factor of the blue-glass lens element is FB, the following condition can be satisfied: $0 < FB$. By designing an appropriate comprehensive arranging factor on the blue-glass lens element, the arranging requirements of the blue glass on the optical paths in all fields of view of the optical lens element can be comprehensively considered, and it is favorable for optimizing the filtering effect of the near-infrared light. Further, the following condition can be satisfied: $1.00 \leq FB$. Further, the following condition can be satisfied: $2.00 \leq FB$. Further, the following condition can be satisfied: $2.50 \leq FB$. Further, the following condition can be satisfied: $3.00 \leq FB \leq \infty$. Further, the following condition can be satisfied: $5.00 \leq FB \leq 100.00$. Further, the following condition can be satisfied: $7.50 \leq FB \leq 10.00$.

According to the optical lens assembly of the present disclosure, when an Abbe number of each of the optical lens elements is V, the blue-glass lens element satisfies the following condition: $20.00 \leq V$. By satisfying the Abbe number of the blue-glass lens element, the material of the optical lens element and the blue glass material can be evenly mixed with each other so as to reduce the haze, and it is favorable for enhancing the uniformity of the blue-glass lens element and the transmittance of the visible light. Further, the following condition can be satisfied: $30.00 \leq V \leq 100.00$. Further, the following condition can be satisfied: $40.00 \leq V \leq 90.00$. Further, the following condition can be satisfied: $50.00 \leq V \leq 85.00$. Further, the following condition can be satisfied: $60.00 \leq V \leq 80.00$. Further, the following condition can be satisfied: $70.00 \leq V \leq 75.00$.

According to the optical lens assembly of the present disclosure, the at least four optical lens elements can include a long-wavelength absorbing lens element. By arranging the long-wavelength absorbing lens element, it is favorable for enhancing the filtering of the near-infrared light bands that are poorly filtered by the blue-glass lens element.

According to the optical lens assembly of the present disclosure, when a main arranging factor of the long-wavelength absorbing lens element is FA, the following condition can be satisfied: $0.50 \leq FA$. By designing an appropriate main arranging factor on the long-wavelength absorbing lens element, the difference among the optical paths in all fields of view can be ensured to be small, and it is favorable for reducing the filtering difference of the near-infrared light of the long-wavelength absorbing lens element in all fields of view. Further, the following condition can be satisfied: $0.80 \leq FA \leq \infty$. Further, the following condition can be satisfied: $1.00 \leq FA \leq 100.00$. Further, the following condition can be satisfied: $1.20 \leq FA \leq 10.00$. Further, the following condition can be satisfied: $2.00 \leq FA \leq 5.00$. Further, the following condition can be satisfied: $2.50 \leq FA \leq 3.00$. Further, the following condition can be satisfied: $2.80 \leq FA \leq 2.90$.

According to the optical lens assembly of the present disclosure, when a material arranging factor of the long-wavelength absorbing lens element is Fam, the following condition can be satisfied: $20.00 \leq Fam \leq 50.00$. By satisfying the material arranging factor on the long-wavelength absorbing lens element, the material of the optical lens element and the long-wavelength absorbing material can be evenly mixed with each other, and it is favorable for enhancing the uniformity of the long-wavelength absorbing lens element. Further, the following condition can be satisfied: $25.00 \leq Fam \leq 45.00$. Further, the following condition can be satisfied: $30.00 \leq Fam \leq 40.00$. Further, the following condition can be satisfied: $35.00 \leq Fam \leq 38.00$.

According to the optical lens assembly of the present disclosure, when a central thickness along an optical axis of the blue-glass lens element is CTB, and a central thickness along the optical axis of the long-wavelength absorbing lens element is CTA, the following condition can be satisfied: $1.00 \leq CTB/CTA$. By satisfying the ratio of the thicknesses of the blue-glass lens element and the long-wavelength absorbing lens element, the best combination of the blue-glass lens element and the long-wavelength absorbing lens element can be obtained, and it is favorable for enhancing the overall filtering effect of the near-infrared light of the optical lens assembly. Further, the following condition can be satisfied: $1.20 \leq CTB/CTA$. Further, the following condition can be satisfied: $1.40 \leq CTB/CTA$. Further, the following condition can be satisfied: $1.50 \leq CTB/CTA \leq 3.00$. Further, the following condition can be satisfied: $1.60 \leq CTB/CTA \leq 2.50$. Further, the following condition can be satisfied: $1.70 \leq CTB/CTA \leq 2.30$. Further, the following condition can be satisfied: $1.90 \leq CTB/CTA \leq 2.10$.

According to the optical lens assembly of the present disclosure, when a wavelength at 50% transmittance of the optical lens assembly is Wt50, the following condition can be satisfied: $600 \text{ nm} \leq Wt50 \leq 700 \text{ nm}$. By limiting the wavelength at the 50% transmittance of the optical lens assembly, the 50% transmittance can be limited within the range of the visible light. Thus, the filtering band of the optical lens assembly can be biased toward the visible light, and it is favorable for reducing the transmission of the near-infrared light. Further, the following condition can be satisfied: $600 \text{ nm} \leq Wt50 \leq 680 \text{ nm}$. Further, the following condition can be satisfied: $600 \text{ nm} \leq Wt50 \leq 660 \text{ nm}$. Further, the following condition can be satisfied: $600 \text{ nm} \leq Wt50 \leq 650 \text{ nm}$.

According to the optical lens assembly of the present disclosure, when an average transmittance in a wavelength range of 600 nm - 650 nm of the optical lens assembly is T6065, the following condition can be satisfied: $T6065 \leq 60.00\%$. By limiting the transmittance in the wavelength range of 600 nm - 650 nm, a low transmittance of the long-wavelength red light can be ensured, so that the extra red light can be reduced so as to enhance the imaging quality. Further, the following condition can be satisfied: $T6065 \leq 55.00\%$. Further, the following condition can be satisfied: $T6065 \leq 50.00\%$. Further, the following condition can be satisfied: $T6065 \leq 45.00\%$. Further, the following condition can be satisfied: $0\% \leq T6065 \leq 40.00\%$.

According to the optical lens assembly of the present disclosure, when an average transmittance in a wavelength range of 650 nm - 700 nm of the optical lens assembly is T6570, the following condition can be satisfied: $T6570 \leq 30.00\%$. By limiting the transmittance in the wavelength range of 650 nm - 700 nm, a low transmittance of the short-wavelength near-infrared light can be ensured, and it is favorable for reducing the imaging interference caused by the short-wavelength near-infrared light. Further, the following condition can be satisfied: $T6570 \leq 25.00\%$. Further, the following condition can be satisfied: $T6570 \leq 20.00\%$. Further, the following condition can be satisfied: $T6570 ::; 15.00\%$. Further, the following condition can be satisfied: $0\% \leq T6570 ::; 13.00\%$.

According to the optical lens assembly of the present disclosure, when an average transmittance in a wavelength range of 700 nm - 1050 nm of the optical lens assembly is T70105, the following condition can be satisfied: T70105 ≤ 10.00%. By limiting the transmittance in the wavelength range of 700 nm - 1050 nm, a low transmittance of the near-infrared light within the detectable band of the image sensor can be ensured, and it is favorable for reducing the imaging interference caused by the near-infrared light within the detectable band. Further, the following condition can be satisfied: T70105 ≤ 5.00%. Further, the following condition can be satisfied: T70105 ≤ 3.00%. Further, the following condition can be satisfied: T70105 ≤ 2.00%. Further, the following condition can be satisfied: T70105 ≤ 1.00%. Further, the following condition can be satisfied: 0% ≤ T70105 ≤ 0.50%.

According to the optical lens assembly of the present disclosure, when a transmittance at a wavelength of 850 nm of the optical lens assembly is T85, the following condition can be satisfied: T85 ≤ 10.00%. By limiting the transmittance at the wavelength of 850 nm, it is favorable for preventing the optical imaging from affecting by the products that emit the near-infrared light of 850 nm in daily life. Further, the following condition can be satisfied: T85 ≤ 5.00%. Further, the following condition can be satisfied: T85 ≤ 2.50%. Further, the following condition can be satisfied: T85 ≤ 1.00%. Further, the following condition can be satisfied: T85 ≤ 0.50%. Further, the following condition can be satisfied: 0% ≤ T85 ≤ 0.30%.

According to the optical lens assembly of the present disclosure, when a transmittance at a wavelength of 940 nm of the optical lens assembly is T94, the following condition can be satisfied: T94 ≤ 10.00%. By limiting the transmittance at the wavelength of 940 nm, it is favorable for preventing the optical imaging from affecting by the products that emit the near-infrared light of 940 nm in daily life. Further, the following condition can be satisfied: T94 ≤ 5.00%. Further, the following condition can be satisfied: T94 ≤ 2.50%. Further, the following condition can be satisfied: T94 ≤ 1.00%. Further, the following condition can be satisfied: T94 ≤ 0.50%. Further, the following condition can be satisfied: 0% ≤ T94 ≤ 0.30%.

According to the optical lens assembly of the present disclosure, when a transmittance at a wavelength of 1050 nm of the optical lens assembly is T105, the following condition can be satisfied: T105 ≤ 10.00%. By limiting the transmittance at the wavelength of 1050 nm, it is favorable for preventing the optical imaging from affecting by the products that emit the near-infrared light of 1050 nm in daily life. Further, the following condition can be satisfied: T105 ≤ 5.00%. Further, the following condition can be satisfied: T105 ≤ 2.50%. Further, the following condition can be satisfied: T105 ≤ 1.00%. Further, the following condition can be satisfied: T105 ≤ 0.50%. Further, the following condition can be satisfied: 0% ≤ T105 ≤ 0.30%.

According to the optical lens assembly of the present disclosure, the at least four optical lens elements can include a long-wavelength filtering lens element, and the long-wavelength filtering lens element can include a long-wavelength filtering coating membrane. The long-wavelength filtering coating membrane includes at least one low refractive index layer and at least one high refractive index layer, and the long-wavelength filtering coating membrane is formed by alternately stacking the at least one high refractive index layer and the at least one low refractive index layer. By arranging the long-wavelength filtering lens element, it is favorable for filtering the near-infrared light bands that are poorly filtered by the blue-glass lens element.

According to the optical lens assembly of the present disclosure, when a coating arranging factor of an object-side surface of the long-wavelength filtering lens element is FcR1, and a coating arranging factor of an image-side surface of the long-wavelength filtering lens element is FcR2, the following conditions can be satisfied: 5.00 ≤ FcR1; or 5.00 ≤ FcR2. By satisfying the coating arranging factors on the object-side surface or the image-side surface of the long-wavelength filtering lens element, the undulations on the surface of the optical lens element can be reduced, and it is favorable for enhancing the arranging uniformity of the filter coating membrane. Further, the following conditions can be satisfied: 7.50 ≤ FcR1; or 7.50 ≤ FcR2. Further, the following conditions can be satisfied: 10.00 ≤ FcR1; or 10.00 ≤ FcR2. Further, the following conditions can be satisfied: 15.00 ≤ FcR1; or 15.00 ≤ FcR2. Further, the following conditions can be satisfied: 20.00 ≤ FcR1; or 20.00 ≤ FcR2. Further, the following conditions can be satisfied: 50.00 ≤ FcR1 ≤ ∞; or 50.00 ≤ FcR2 ≤ ∞. Further, the following conditions can be satisfied: 100.00 ≤ FcR1 ≤ 1000.00; or 100.00 ≤ FcR2 ≤ 1000.00.

According to the optical lens assembly of the present disclosure, the blue-glass lens element and the long-wavelength filtering lens element can be the same one of the optical lens elements. The blue-glass lens element is resistant to high temperatures. Thus, by arranging the blue-glass lens element and the long-wavelength filtering lens element as the same optical lens element, the deformation of the optical lens element caused by the long-wavelength filtering coating membrane can be reduced so as to reduce the influence of the imaging caused by the deformation of the optical lens element, and it is favorable for maintaining the good imaging quality of the optical lens assembly.

According to the optical lens assembly of the present disclosure, when a merge arranging factor of an object-side surface of the blue-glass lens element is FbcR1, and a merge arranging factor of an image-side surface of the blue-glass lens element is FbcR2, the following conditions can be satisfied: 4.00 ≤ FbcR1; or 4.00 ≤ FbcR2. By satisfying the merge arranging factor on the object-side surface or the image-side surface of the long-wavelength filtering lens element, the best combination of the blue glass and the long-wavelength filtering coating membrane can be obtained, and it is favorable for enhancing the overall filtering effect of the near-infrared light of the optical lens assembly. Further, the following conditions can be satisfied: 6.00 ≤ FbcR1; or 6.00 ≤ FbcR2. Further, the following conditions can be satisfied: 8.00 ≤ FbcR1; or 8.00 ≤ FbcR2. Further, the following conditions can be satisfied: 12.00 ≤ FbcR1; or 12.00 ≤ FbcR2. Further, the following conditions can be satisfied: 16.00 ≤ FbcR1; or 16.00 ≤ FbcR2. Further, the following conditions can be satisfied: 40.00 ≤ FbcR1 ≤ ∞; or 40.00 ≤ FbcR2 ≤ ∞. Further, the following conditions can be satisfied: 80.00 ≤ FbcR1 ≤ 800.00; or 80.00 ≤ FbcR2 ≤ 800.00.

According to the optical lens assembly of the present disclosure, when a total number of layers of the long-wavelength filtering coating membrane is tLs, the following condition can be satisfied: tLs ≤ 80. By combining the blue-glass lens element with the long-wavelength filtering coating membrane, the total number of layers of the filtering coating membrane can be reduced, and it is favorable for streamlining the production process. Further, the following condition can be satisfied: 0 < tLs ≤ 70. Further, the following condition can be satisfied: 20 ≤ tLs ≤ 60. Further, the following condition can be satisfied: 30 ≤ tLs ≤ 50.

According to the optical lens assembly of the present disclosure, when a total thickness of the long-wavelength filtering coating membrane is tTk, the following condition can be satisfied: 3000 nm ≤ tTk ≤ 10000 nm. By combining the blue-glass lens element with the long-wavelength filtering coating membrane, the thickness of the filtering coating membrane can be reduced, and it is favorable for reducing manufacturing costs. Further, the following condition can be satisfied: 4500 nm ≤ tTk ≤ 9000 nm. Further, the following condition can be satisfied: 4500 nm ≤ tTk ≤ 8000 nm. Further, the following condition can be satisfied: 5000 nm ≤ tTk ≤ 7000 nm. Further, the following condition can be satisfied: 5500 nm ≤ tTk ≤ 6000 nm.

According to the optical lens assembly of the present disclosure, when a total thickness of the high refractive index layer is HtTk, and a total thickness of the low refractive index layer is LtTk, the following condition can be satisfied: 1.00 ≤ LtTk/HtTk ≤ 2.00. By designing a specific ratio between the total thickness of the low refractive index layer and the total thickness of the high refractive index layer, the filtering ability to the near-infrared light of the long-wavelength filtering lens element can be enhanced, and it is favorable for enhancing the filtering effect of the near-infrared light of the optical lens assembly. Further, the following condition can be satisfied: 1.20 ≤ LtTk/HtTk ≤ 1.90. Further, the following condition can be satisfied: 1.30 ≤ LtTk/HtTk ≤ 1.80. Further, the following condition can be satisfied: 1.50 ≤ LtTk/HtTk ≤ 1.70. Further, the following condition can be satisfied: 1.55 ≤ LtTk/HtTk ≤ 1.65.

According to the optical lens assembly of the present disclosure, when a refractive index of the high refractive index layer is NH, and a refractive index of the low refractive index layer is NL, the following condition can be satisfied: 0.50 ≤ NH-NL. By arranging the difference of the refractive index between the high refractive index layer and the low refractive index layer, the best filtering effect of the near-infrared light of the long-wavelength filtering lens element can be obtained. Further, the following condition can be satisfied: 0.60 ≤ NH-NL. Further, the following condition can be satisfied: 0.70 ≤ NH-NL ≤ 2.00. Further, the following condition can be satisfied: 0.80 ≤ NH-NL ≤ 1.50. Further, the following condition can be satisfied: 0.85 ≤ NH-NL ≤ 1.00.

According to the optical lens assembly of the present disclosure, when an axial distance between an object-side surface of the first optical lens element and an image-side surface of a last one of the optical lens elements is TD, and a maximum image height of the optical lens assembly is ImgH, the following condition can be satisfied: 0 < TD/ImgH ≤ 2.00. By arranging the specific ratio between the length of the optical lens assembly and the maximum image height, the length of the optical lens assembly per unit height can be reduced, and it is favorable for balancing the space efficiency and the imaging quality of the optical lens assembly. Further, the following condition can be satisfied: TD/ImgH ≤ 15.00. Further, the following condition can be satisfied: TD/ImgH ≤ 10.00. Further, the following condition can be satisfied: 0.80 ≤ TD/ImgH ≤ 1.20. Further, the following condition can be satisfied: 0.50 ≤ TD/ImgH ≤ 5.00. Further, the following condition can be satisfied: 2.00 ≤ TD/ImgH ≤ 3.00. Further, the following condition can be satisfied: 3.00 ≤ TD/ImgH ≤ 8.00. Further, the following condition can be satisfied: 4.50 ≤ TD/ImgH ≤ 5.50.

According to the optical lens assembly of the present disclosure, when a total focal length of the optical lens assembly is F, and the maximum image height of the optical lens assembly is ImgH, the following condition can be satisfied: 2.50 F/ImgH ≤ 4.00. By arranging the specific ratio between the total focal length of the optical lens assembly and the maximum image height, an appropriate focusing distance can be obtained, the focusing effect of light can be enhanced, and it is favorable for enhancing the imaging quality. Further, the following condition can be satisfied: F/ImgH ≤ 10.00. Further, the following condition can be satisfied: 0 < F/ImgH ≤ 5.00. Further, the following condition can be satisfied: 0.80 ≤ F/ImgH ≤ 2.50. Further, the following condition can be satisfied: 1.10 ≤ FIImgH ≤ 1.20. Further, the following condition can be satisfied: 3.30 ≤ F/ImgH ≤ 3.40. Further, the following condition can be satisfied: 0 < F/ImgH ≤ 0.80. Further, the following condition can be satisfied: 0.55 ≤ F/ImgH ≤ 0.60.

According to the optical lens assembly of the present disclosure, when the total focal length of the optical lens assembly is F, and the axial distance between the object-side surface of the first optical lens element and the image-side surface of the last one of the optical lens elements is TD, the following condition can be satisfied: 0 < F/TD ≤ 0.80. By arranging the specific ratio between the focal length and the length of the optical lens assembly, the focal length and the optical path can be balanced. Thus, the best focusing effect within the length of the optical lens assembly can be ensured, and it is favorable for optimizing the focusing effect. Further, the following condition can be satisfied: F/TD ≤ 5.00. Further, the following condition can be satisfied: F/TD ≤ 4.00. Further, the following condition can be satisfied: 0.80 ≤ F/TD ≤ 1.20. Further, the following condition can be satisfied: 0.90 ≤ F/TD ≤ 1.10. Further, the following condition can be satisfied: 1.20 ≤ F/TD ≤ 4.50. Further, the following condition can be satisfied: 3.50 ≤ F/TD ≤ 4.00. Further, the following condition can be

satisfied: $0.10 \leq F/TD \leq 0.15$.

According to the optical lens assembly of the present disclosure, when a maximum field of view of the optical lens assembly is FOV, the following condition is satisfied: 0 degrees < FOV $\leq$ 50.00 degrees. The filtering coating membrane has a poor filtering effect of the near-infrared light with large incident angles, and by limiting the maximum field of view of the optical lens assembly, the light can be prevented from entering the filtering optical lens element on large angles, and it is favorable for enhancing the filtering effect of the near-infrared light of the filtering optical lens element. Further, the following condition can be satisfied: FOV $\leq$ 60.00 degrees. Further, the following condition can be satisfied: 10.00 degrees $\leq$ FOV $\leq$ 40.00 degrees. Further, the following condition can be satisfied: 30.00 degrees $\leq$ FOV $\leq$ 35.00 degrees.

The optical lens assembly of the present disclosure can include the optical lens elements, a cover glass, a blue glass, a micro lens, a filter, a color filter and other optical elements with the visible light penetration characteristics.

According to the object side and the image side of the optical lens assembly of the present disclosure, the image side is the side close to the image sensor along the optical axis, and the object side is the side away from to the image sensor along the optical axis.

The optical lens elements of the optical lens assembly of the present disclosure can include at least one optical lens element, at least two optical lens elements, at least three optical lens elements, at least four optical lens elements, at least five optical lens elements, at least six optical lens elements, at least seven optical lens elements, at least eight optical lens elements, at least nine optical lens elements and at least ten optical lens elements; and the object side to the image side of the optical lens assembly can be the first optical lens element to the second optical lens element, the third optical lens element, the fourth optical lens element, the fifth optical lens element, the sixth optical lens element, the seventh optical lens element, the eighth optical lens element, the ninth optical lens element, the tenth optical lens element, and so on. The optical lens elements can include the blue-glass lens element, the long-wavelength absorbing lens element and the long-wavelength filtering lens element. The optical lens assembly can include a single piece or multiple pieces of the blue-glass lens element, the long-wavelength absorbing lens element or the long-wavelength filtering lens element. For example, the optical lens assembly can include at least one blue-glass lens element, the optical lens assembly can include at least two blue-glass lens elements, the optical lens assembly can include at least three blue-glass lens elements, the optical lens assembly can include at least four blue-glass lens elements, and the optical lens assembly can include at least five blue-glass lens elements; the optical lens assembly can include at least one long-wavelength absorbing lens element, the optical lens assembly can include at least two long-wavelength absorbing lens elements, the optical lens assembly can include at least three long-wavelength absorbing lens elements, the optical lens assembly can include at least four long-wavelength absorbing lens elements, and the optical lens assembly can include at least five long-wavelength absorbing lens elements; and the optical lens assembly can include at least one long-wavelength filtering lens element, the optical lens assembly can include at least two long-wavelength filtering lens elements, the optical lens assembly can include at least three long-wavelength filtering lens elements, the optical lens assembly can include at least four long-wavelength filtering lens elements, and the optical lens assembly can include at least five long-wavelength filtering lens elements.

The optical lens element of the present disclosure has an object-side surface and an image-side surface, the surface shape of the object-side surface of the optical lens element can be spherical or aspherical, and the surface shape of the image-side surface of the optical lens element can be spherical or aspherical.

The material of the optical lens element of the present disclosure can be a plastic or a glass, the blue glass material can be added to the glass lens element so as to form the blue-glass lens element, or the long-wavelength absorbing material can be added to the plastic lens element so as to form the long-wavelength absorbing lens element. When the material of the optical lens element is the plastic, the optical lens element can include poly(methyl methacrylate) (PMMA), polystyrene (PS), polycarbonate (PC), cyclo olefin polymer (COP), cyclic olefin copolymer (COC), polyetherimide (PEI) and polyester resin (OKP-4 or OKP-4HT).

The optical path of the optical lens element of the present disclosure means the straight-line distance between the chief ray in the field of view (R1 ray) between the incident point and the exit point of the optical lens element, and the fields of view used to calculate the optical path are obtained by dividing 0 F to 1.0 F (1.0 field of view) into 50 equal parts to get 51 fields of view namely 0 F, 0.02 F, 0.04 F, 0.06 F, 0.08 F, 0.10 F, 0.12 F, 0.14 F, 0.16 F, 0.18 F, 0.20 F, 0.22 F, 0.24 F, 0.26 F, 0.28 F, 0.30 F, 0.32 F, 0.34 F, 0.36 F, 0.38 F, 0.40 F, 0.42 F, 0.44 F, 0.46 F, 0.48 F, 0.50 F, 0.52 F, 0.54 F, 0.56 F, 0.58 F, 0.60 F, 0.62 F, 0.64 F, 0.66 F, 0.68 F, 0.70 F, 0.72 F, 0.74 F, 0.76 F, 0.78 F, 0.80 F, 0.82 F, 0.84 F, 0.86 F, 0.88 F, 0.90 F, 0.92 F, 0.94 F, 0.96 F, 0.98 F and 1.0 F.

The blue-glass lens element of the optical lens assembly of the present disclosure means the optical lens element that has the material thereof including the blue glass material. The blue glass material can mainly absorb the light with a wavelength of more than 600 nm. The blue-glass lens element can be the first optical lens element, the second optical lens element, the third optical lens element, the fourth optical lens element, the fifth optical lens element, the sixth optical lens element, the seventh optical lens element, the eighth optical lens element, the ninth optical lens element and the tenth optical lens element of the optical lens assembly. The material of the blue glass material can include phosphorus ions ($P^{5+}$ or $P^{3+}$), aluminum ion ($Al^{3+}$), antimony ions ($Sb^{5+}$ or $Sb^{3+}$), copper ion ($Cu^{2+}$), magnesium ion ($Mg^{2+}$), calcium ion ($Ca^{2+}$), strontium ion ($Sr^{2+}$), barium ion ($Ba^{2+}$), zinc ion ($Zn^{2+}$), lithium ion ($Li^+$), sodium ion ($Na^+$), potassium ion ($K^+$), phosphorus

radical ($PO_4^{3-}$), fluorine ion ($F^-$), etc. Or, the material of the blue glass material can include inorganic compounds including the aforementioned ions.

The long-wavelength absorbing lens element of the optical lens assembly of the present disclosure means the optical lens element that has the material thereof including the long-wavelength absorbing material. The long-wavelength absorbing material is the organic compound that can mainly absorb the light with a wavelength of more than 600 nm. The long-wavelength absorbing lens element can be the first optical lens element, the second optical lens element, the third optical lens element, the fourth optical lens element, the fifth optical lens element, the sixth optical lens element, the seventh optical lens element, the eighth optical lens element, the ninth optical lens element and the tenth optical lens element of the optical lens assembly.

The long-wavelength filtering lens element of the optical lens assembly of the present disclosure means the optical lens element including the long-wavelength filtering coating membrane disposed on the object-side surface or the image-side surface thereof. The long-wavelength filtering coating membrane can mainly reduce the transmittance of the light with a wavelength of more than 600 nm. The long-wavelength filtering lens element can be the first optical lens element, the second optical lens element, the third optical lens element, the fourth optical lens element, the fifth optical lens element, the sixth optical lens element, the seventh optical lens element, the eighth optical lens element, the ninth optical lens element and the tenth optical lens element of the optical lens assembly.

The long-wavelength filtering coating membrane of the present disclosure can be disposed on at least one surface of the object-side surface and the image-side surface of the optical lens element in the optical lens assembly. The long-wavelength filtering coating membrane is actually disposed on the object-side surface and the image-side surface of the first optical lens element, the object-side surface and the image-side surface of the second optical lens element, the object-side surface and the image-side surface of the third optical lens element, the object-side surface and the image-side surface of the fourth optical lens element, the object-side surface and the image-side surface of the fifth optical lens element, the object-side surface and the image-side surface of the sixth optical lens element, the object-side surface and the image-side surface of the seventh optical lens element, the object-side surface and the image-side surface of the eighth optical lens element, the object-side surface and the image-side surface of the ninth optical lens element, and the object-side surface and the image-side surface of the tenth optical lens element. The long-wavelength filtering coating membrane can be further disposed on the object-side surface or the image-side surface of the blue-glass lens element, so that the long-wavelength filtering lens element and the blue-glass lens element can be the same optical lens element. The long-wavelength filtering coating membrane can be further disposed on the object-side surface or the image-side surface of the long-wavelength absorbing lens element, so that the long-wavelength filtering lens element and the long-wavelength absorbing lens element can be the same optical lens element. The long-wavelength filtering coating membrane can be simultaneously disposed on the object-side surface and the image-side surface of one optical lens element, the long-wavelength filtering coating membrane also can be simultaneously disposed on the object-side surface and the image-side surface of different optical lens elements, and the number of layers and the thickness thereof on the object-side surface and the image-side surface can be exchanged. The optical lens element including the long-wavelength filtering coating membrane disposed on different sides can have less deformation compared to the optical lens element including the long-wavelength filtering coating membrane disposed on the same side. For example, the long-wavelength filtering coating membrane can be disposed on the image-side surface of the first optical lens element and the object-side surface of the second optical lens element, the long-wavelength filtering coating membrane can be disposed on the object-side surface of the second optical lens element and the image-side surface of the second optical lens element, or the long-wavelength filtering coating membrane can be disposed on the object-side surface of the third optical lens element and the image-side surface of the fourth optical lens element. The number of the optical lens element including the long-wavelength filtering coating membrane can be one, two, three, four, five, six, seven, eight, nine or ten. The long-wavelength filtering coating membrane disposed on the object-side surface and the image-side surface of the optical lens element means the long-wavelength filtering coating membrane is directly or indirectly disposed on the object-side surface and the image-side surface of the optical lens element, wherein the indirect disposition means that there are other kinds of coating membranes (such as anti-reflecting membranes) or other arrangements (such as coating layers or other materials) between the long-wavelength filtering coating membrane and the surface of the optical lens element. The arranging position of the long-wavelength filtering coating membrane also can be the object-side surface and the image-side surface of other optical elements, and the optical elements that can be arranged therewith are the flat glass, the protective glass, the plastic plate, the glass plate, the reflective element, etc. The filtering coating membrane disposed on other elements can enhance the complete filtering effect of the insufficient wavelength bands, so that the coating membrane formed on the surface of the optical lens element can be used to filter the light with a specific wavelength band so as to reduce the number of layers and the thickness.

In the layer composition of the long-wavelength filtering coating membrane of the present disclosure, the long-wavelength filtering coating membrane can include at least one membrane layer. The first membrane layer of the long-wavelength filtering coating membrane can be located the side close to the surface of the optical lens element, or the first membrane layer of the long-wavelength filtering coating membrane can be located the side away from the surface of the optical lens element. The long-wavelength filtering coating membrane is formed by alternately stacking the high refractive index layers and the low refractive index layers. The high refractive index layer means that the membrane layer has a refractive index higher than that of the previous membrane layer, the low refractive index layer means that the membrane layer has a refractive index lower than that of the previous membrane layer, and the first membrane layer is defined as a high refractive index layer or a low refractive index layer based on the second membrane layer as a comparing standard. For example, if the refractive index of the first membrane layer is larger than that of the second membrane layer, the first membrane layer is a high refractive index layer; and if the refractive index of the first membrane layer is smaller that of the second membrane layer, the first membrane layer is a low refractive index layer. The total number of layers of the long-wavelength filtering coating membrane can be the sum of the membrane layers of the long-wavelength filtering coating membranes on the object-side surface and the image-side surface of each of the optical lens elements. The total thickness of the long-wavelength filtering coating membrane can be the sum of the thicknesses of the long-wavelength filtering coating membranes on the object-side surface and the image-side surface of each of the optical lens elements. Because the long-wavelength filtering coating membrane can be disposed on the object-side surface and the image-side surface of different optical lens elements, the total number of layers and the total thickness of the long-wavelength filtering coating membrane should be calculated for all of the membrane layers that substantially have the filtering effects of the long-wavelength light of all of the optical lens elements. The material of the membrane layer can include (Wavelength = 587.6 nm) $MgF_2$ (1.3777), $SiO_2$ (1.4585), $ThF_4$ (1.5125), $SiO$ (1.55), $CeF_3$ (1.63), $Al_2O_3$ (1.7682), $Y_2O_3$ (1.79), $HfO_2$ (1.8935), $ZnO$ (1.9269), $Sc_2O_3$ (1.9872), $AIN$ (2.0294), $Si_3N_4$ (2.0381), $Ta_2O_5$ (2.1306), $ZrO_2$ (2.1588), $ZnS$ (2.2719), $Nb_2O_5$ (2.3403), $TiO_2$ (2.6142) and $TiN$ (3.1307). Furthermore, the coating material of the near-infrared light filter coating membrane can be a $MgF_2$-$SiO_2$ Mixture, and the content ratio is $[SiO_2] > [MgF_2]$.

The manufacturing technology of the long-wavelength filtering coating membrane of the present disclosure can be a liquid phase coating method or a vapor phase coating method. The liquid phase coating method can be the acid etching method, the solution deposition method, the electroplating method, the anodizing method, the sol-gel method, Langmuir-Blodgett (LB) film or liquid phase epitaxy, etc. The vapor phase coating method can be the chemical vapor coating method or the physical vapor coating method. Furthermore, if the curvature of the coated lens element has a greater change, the atomic layer deposition (ALD) should be used so as to achieve the best uniformity of the membrane, so that the integral efficacy of the long-wavelength filtering coating membrane can be ensured.

In the arranging position of the anti-reflective coating membrane of the present disclosure, the anti-reflective coating membrane can be disposed on the object-side surface or the image-side surface of the optical lens element. Therefore, an excellent anti-reflection effect can be obtained, the serious reflection problems in the peripheral region of the optical lens element caused by the large angle of light incident on the surface thereof can be reduced, and thus the light transmittance of the optical lens assembly can be improved effectively so as to achieve the best anti-reflection effect.

In the membrane composition of the anti-reflective coating membrane of the present disclosure, the anti-reflective coating membrane can include at least one membrane layer which can be formed by alternately stacking high refractive index layers and low refractive index layers, formed by subwavelength structures, formed by the combination of the high refractive index layers and the subwavelength structures, formed by the combination of the low refractive index layers and the subwavelength structures, or formed by the combination of the high refractive index layers, the low refractive index layers and the subwavelength structures. The anti-reflective coating membrane can include a long-wavelength filtering coating membrane on the inside (adjacent to the substrate). The anti-reflective coating membrane can include the subwavelength structures disposed on the outer side (adjacent to the air), and the material of the subwavelength structures can be a metal oxide such as aluminum oxide ($Al_2O_3$). The subwavelength structures of the anti-reflective coating membrane can include a plurality of holes, and the sizes of the holes adjacent to the outside of the anti-reflective coating membrane are larger than that of the holes adjacent to the inside of the anti-reflective coating membrane.

The best coating surface shape of the optical lens element of the present disclosure is determined based on the horizontal displacement of the optical lens element at the position of the maximum effective diameter, the central thickness of the optical lens element and the radius of curvature at the center of the optical lens element so as to divide 0 F to 1.0 F (1.0 field of view ) into 50 equal parts to get 51 fields of view namely 0 F, 0.02 F, 0.04 F, 0.06 F, 0.08 F, 0.10 F, 0.12 F, 0.14 F, 0.16 F, 0.18 F, 0.20 F, 0.22 F, 0.24 F, 0.26 F, 0.28 F, 0.30 F, 0.32 F, 0.34 F, 0.36 F, 0.38 F, 0.40 F, 0.42 F, 0.44 F, 0.46 F, 0.48 F, 0.50 F, 0.52 F, 0.54 F, 0.56 F, 0.58 F, 0.60 F, 0.62 F, 0.64 F, 0.66 F, 0.68 F, 0.70 F, 0.72 F, 0.74 F, 0.76 F, 0.78 F, 0.80 F, 0.82 F, 0.84 F, 0.86 F, 0.88 F, 0.90 F, 0.92 F, 0.94 F, 0.96 F, 0.98 F and 1.0 F, and the highest point of the light passing through all of the 51 fields of view is the maximum of the effective diameter. The direction of the horizontal displacement means the direction that the optical axis passes through the optical lens element. The horizontal displacement at the position of the maximum effective diameter is a horizontal displacement from the canter of the optical lens element to the position of the maximum effective diameter. The radius of curvature of the optical lens element is calculated based on the target point of the optical lens element and two points that are 1E-10 mm upper and lower away from the target point in the direction perpendicular to the optical axis.

The transmittance of the optical lens assembly of the present disclosure means the transmittance at the incident angle of 0 degrees, and the transmittance and the average transmittance are calculated based on 5 nm as an interval. The wavelength at 50% transmittance of the optical lens assembly means the wavelength at 50% transmittance at which the transmittance decreases along with the increase of the wavelength.

In the compensating technology of the optical lens element of the present disclosure, when the optical lens element is made of the plastic material, the surface shape change error thereof will be too large due to high temperature, especially when the thickness of the optical lens element is too small. When the number of layers is larger, the precision of the surface shape is affected by the temperature more obviously. Thus, by the lens compensating technology, the problem of temperature effect while coating on the plastic surface can be effectively solved, so that it is favorable for maintaining the integrity of the coating on the optical lens element and the high precision of the plastic lens element, and it is the key technology for achieving the high quality of the optical lens assembly. The lens compensating technology can be the moldflow analysis method, the curve fitting method or the wavefront error method, but the present disclosure is not limited thereto. The moldflow analysis method is to find the three-dimensional contour nodes of the lens surface shrinking in the Z-axis through mold flow analysis, and then the three-dimensional contour nodes are converted into an aspherical curve so as to compare with the original curve to find the difference there between. At the same time, the material shrinkage rate and the surface deformation trend are considered so as to calculate and obtain the compensation value. The curve fitting method is to measure the surface contour error of the element, then the curve fitting is performed based on a function, and then an optimization algorithm method is used to approximate the fitted curve to the measurement point so as to obtain the compensation value. The function can be exponential or polynomial, and the algorithm method can be Gauss Newton method, the simplex algorithm method, the steepest descent method, etc. The wavefront error method is to measure the wavefront error (imaging error) data by the interferometer, the wavefront error generated by the manufacturing and the assembly is comprehensively analyzed by the original design value of the wavefront error and then is optimized by an optical software so as to obtain the compensation value.

The cover glass of the optical lens assembly of the present disclosure can be disposed on the object side of the image sensor, and at least one or both of the object-side surface and the image-side surface of the cover glass can include the anti-reflective coating membrane. There can be or without an air layer between the cover glass and the image sensor. When the optical lens assembly of the present disclosure is designed as an optical system with the air layer between the cover glass and the image sensor, the anti-reflective coating membrane can be manufactured on at least one or both of the object-side surface and the image-side surface of the cover glass. When the optical lens assembly of the present disclosure is designed as an optical system without the air layer between the cover glass and the image sensor, the anti-reflective coating membrane can be manufactured on the object-side surface of the cover glass. At least one or both of the object-side surface and the image-side surface of the cover glass can include the long-wavelength absorbing material. By the arrangement that the long-wavelength absorbing material is mixed with the polymer with high molecular weight, the polymer with high molecular weight can be disposed on the surface of the cover glass. Further, when the optical lens assembly of the present disclosure is designed as an optical system with the air layer between the cover glass and the image sensor, at least one or both of the object-side surface and the image-side surface of the cover glass can be designed to include the long-wavelength absorbing material membrane layer. When the optical lens assembly of the present disclosure is designed as an optical system without the air layer between the cover glass and the image sensor, the object-side surface of the cover glass can be designed to include the long-wavelength absorbing material membrane layer. Further, the material of the cover glass can be further designed to include the long-wavelength absorbing material.

The micro lens of the optical lens assembly of the present disclosure can be disposed on the object side of the image sensor, and the object-side surface and the image-side surface of the micro lens can include the long-wavelength absorbing material. By the long-wavelength absorbing material is mixed with the polymer with high molecular weight, the polymer with high molecular weight can be disposed on the surface of the micro lens, the polymer with high molecular weight can be disposed between the micro lens and the color filter as a connecting layer, or the long-wavelength absorbing material can be mixed in the color filter. Further, the long-wavelength absorbing material can be disposed in the red filter, the green filter and the blue filter.

In the application of the optical lens assembly of the present disclosure, the optical element of the optical lens assembly can be disposed on a surface of the image sensor. By the arrangement that the long-wavelength filtering coating membrane is arranged on the surface of the optical lens element, it is favorable for reducing the angle at which the chief ray on the field of view at the maximum image height is incident on the image sensor in the optical lens assembly, so that the back focus length and total length can be reduced. !n order to make the refractive index of the optical element and the refractive index of the surface of the image sensor close to each other or the same, a polymer with high molecular weight can be disposed between the optical element and the image sensor. Thus, the light can pass directly through the interface between the cover glass and the image sensor without refraction, and the angle of incidence becoming larger caused by the re-refraction can be avoided.

Each of the aforementioned features of the optical lens assembly of the present disclosure can be utilized in numerous combinations, so as to achieve the corresponding functionality.

According to further another embodiment of the present disclosure, an electronic device includes the aforementioned optical lens assembly.

The electronic device of the present disclosure can be a camera, a video camera, a video lens assembly, a cell phone, a tablet, a laptop, a handheld game console, a home game console, a car device, a vehicle device, an AR glasses, a VR glasses, an AR head-mounted display, a VR head-mounted display, etc.

<Comparative example 1>

The optical lens assembly of Comparative example 1 includes at least four optical lens elements, and the at least four optical lens elements include, in order from an object side of the optical lens assembly to an image side thereof, a first optical lens element, a second optical lens element, a third optical lens element and a fourth optical lens element.

The optical lens assembly of Comparative example 1 does not include the blue glass plate, the long-wavelength filtering plate, the blue-glass lens element, the long-wavelength absorbing lens element or the long-wavelength filtering lens element that are used to filter out the light.

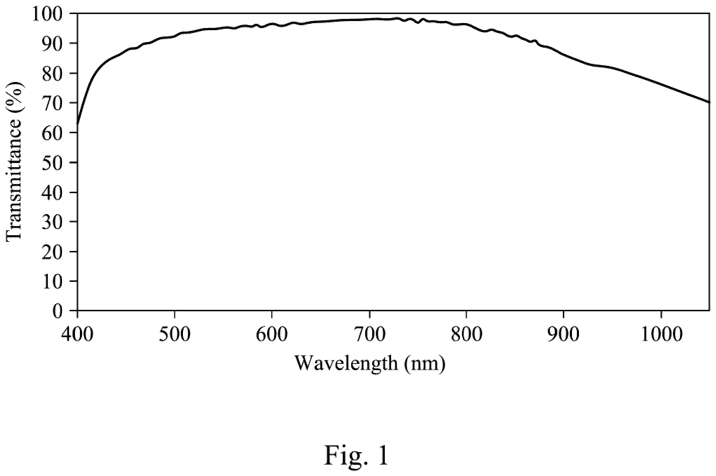

Fig. 1 is a relationship diagram between transmittances and wavelengths of an optical lens assembly according to Comparative example 1, and Table 1A shows the values of transmittance in a wavelength range of 400 nm to 1050 nm of the optical lens assembly of Comparative example 1.

| Table 1A | |
|---|---|
| Wavelength (nm) | Transmittance (%) |
| 400 | 62.61 |
| 405 | 68.93 |
| 410 | 73.84 |
| 415 | 77.61 |
| 420 | 80.45 |
| 425 | 82.40 |
| 430 | 83.51 |
| 435 | 84.92 |
| 440 | 85.63 |
| 445 | 86.73 |
| 450 | 87.19 |
| 455 | 88.03 |
| 460 | 88.21 |
| 465 | 89.10 |
| 470 | 89.78 |
| 475 | 90.13 |
| 480 | 90.94 |
| 485 | 91.55 |
| 490 | 91.81 |
| 495 | 92.31 |
| 500 | 92.60 |
| 505 | 93.38 |
| 510 | 93.47 |
| 515 | 93.80 |
| 520 | 93.75 |
| 525 | 94.12 |
| 530 | 94.24 |
| 535 | 94.55 |

**EP 4 589 347 A1**

(continued)

| Table 1A | |
| --- | --- |
| Wavelength (nm) | Transmittance (%) |
| 540 | 94.70 |
| 545 | 95.09 |
| 550 | 94.99 |
| 555 | 95.28 |
| 560 | 95.20 |
| 565 | 95.52 |
| 570 | 95.58 |
| 575 | 95.43 |
| 580 | 95.66 |
| 585 | 95.90 |
| 590 | 95.62 |
| 595 | 96.20 |
| 600 | 96.38 |
| 605 | 96.29 |
| 610 | 96.29 |
| 615 | 96.34 |
| 620 | 96.76 |
| 625 | 96.76 |
| 630 | 96.54 |
| 635 | 96.87 |
| 640 | 97.03 |
| 645 | 97.13 |
| 650 | 97.27 |
| 655 | 97.37 |
| 660 | 97.42 |
| 665 | 97.47 |
| 670 | 97.71 |
| 675 | 97.92 |
| 680 | 97.84 |
| 685 | 98.02 |
| 690 | 98.03 |
| 695 | 97.99 |
| 700 | 98.07 |
| 705 | 98.37 |
| 710 | 98.12 |
| 715 | 98.17 |
| 720 | 98.23 |
| 725 | 98.28 |

14

(continued)

| Table 1A | |
| --- | --- |
| Wavelength (nm) | Transmittance (%) |
| 730 | 98.27 |
| 735 | 97.96 |
| 740 | 98.08 |
| 745 | 97.92 |
| 750 | 97.36 |
| 755 | 98.03 |
| 760 | 97.64 |
| 765 | 97.64 |
| 770 | 97.23 |
| 775 | 97.19 |
| 780 | 96.98 |
| 785 | 96.61 |
| 790 | 96.56 |
| 795 | 96.36 |
| 800 | 96.37 |
| 805 | 95.60 |
| 810 | 95.11 |
| 815 | 94.49 |
| 820 | 93.98 |
| 825 | 94.49 |
| 830 | 93.96 |
| 835 | 93.51 |
| 840 | 92.78 |
| 845 | 92.41 |
| 850 | 92.72 |
| 855 | 92.06 |
| 860 | 91.30 |
| 865 | 90.72 |
| 870 | 90.62 |
| 875 | 89.58 |
| 880 | 89.22 |
| 885 | 88.59 |
| 890 | 87.80 |
| 895 | 86.99 |
| 900 | 86.12 |
| 905 | 85.31 |
| 910 | 84.64 |
| 915 | 84.13 |

(continued)

| Table 1A ||
|---|---|
| Wavelength (nm) | Transmittance (%) |
| 920 | 83.44 |
| 925 | 82.95 |
| 930 | 82.77 |
| 935 | 82.48 |
| 940 | 82.11 |
| 945 | 81.96 |
| 950 | 81.46 |
| 955 | 81.09 |
| 960 | 80.57 |
| 965 | 80.08 |
| 970 | 79.83 |
| 975 | 79.26 |
| 980 | 78.44 |
| 985 | 77.90 |
| 990 | 77.32 |
| 995 | 76.82 |
| 1000 | 76.12 |
| 1005 | 75.51 |
| 1010 | 74.90 |
| 1015 | 74.33 |
| 1020 | 73.53 |
| 1025 | 73.00 |
| 1030 | 72.38 |
| 1035 | 71.80 |
| 1040 | 71.35 |
| 1045 | 70.71 |
| 1050 | 70.43 |

Table 1B shows the values of parameters of the optical lens assembly of Comparative example 1, wherein Wt50 is a wavelength at 50% transmittance of the optical lens assembly, T6065 is an average transmittance in a wavelength range of 600 nm - 650 nm of the optical lens assembly, T6570 is an average transmittance in a wavelength range of 650 nm - 700 nm of the optical lens assembly, T70105 is an average transmittance in a wavelength range of 700 nm - 1050 nm of the optical lens assembly, T85 is a transmittance at a wavelength of 850 nm of the optical lens assembly, T94 is a transmittance at a wavelength of 940 nm of the optical lens assembly, and T105 is a transmittance at a wavelength of 1050 nm of the optical lens assembly.

| Table 1B | | | |
|---|---|---|---|
| Wt50 (nm) | - | T85 (%) | 92.72 |
| T6065 (%) | 96.70 | T94 (%) | 82.11 |
| T6570 (%) | 97.74 | T105 (%) | 70.43 |

(continued)

| Table 1B | | | |
|---|---|---|---|
| Wt50 (nm) | - | T85 (%) | 92.72 |
| T70105 (%) | 87.72 | | |

If the definitions of parameters shown in tables of the following comparative examples and examples are the same as those shown in Table 1B, those will not be described again.

<Comparative example 2>

The optical lens assembly of Comparative example 2 includes at least four optical lens elements, and the at least four optical lens elements include, in order from an object side of the optical lens assembly to an image side thereof, a first optical lens element, a second optical lens element, a third optical lens element and a fourth optical lens element.
The optical lens assembly of Comparative example 2 includes a blue glass plate and a long-wavelength filtering plate but does not include the blue-glass lens element, the long-wavelength absorbing lens element or the long-wavelength filtering lens element.

<Example 1>

The optical lens assembly of Example 1 includes at least four optical lens elements, the at least four optical lens elements include, in order from an object side of the optical lens assembly to an image side thereof, a first optical lens element, a second optical lens element, a third optical lens element and a fourth optical lens element, and the optical lens assembly of Example 1 includes a blue-glass lens element and a long-wavelength absorbing lens element.

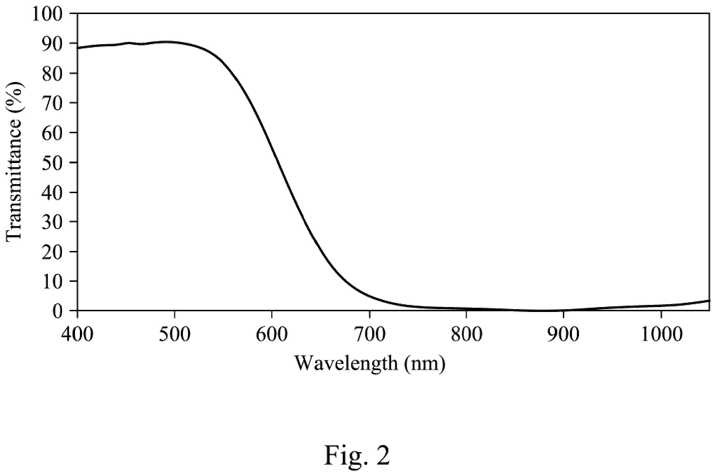

Fig. 2 is a relationship diagram between transmittances and wavelengths of an optical lens assembly according to Example 1, and Table 2A shows the values of transmittance in a wavelength range of 400 nm to 1050 nm of the optical lens assembly of Example 1.

| Table 2A | |
|---|---|
| Wavelength (nm) | Transmittance (%) |
| 400 | 88.08 |
| 405 | 88.54 |
| 410 | 88.48 |
| 415 | 88.54 |
| 420 | 88.73 |
| 425 | 89.18 |
| 430 | 89.32 |
| 435 | 89.13 |
| 440 | 89.18 |
| 445 | 89.29 |
| 450 | 89.73 |
| 455 | 89.88 |
| 460 | 89.49 |
| 465 | 89.80 |
| 470 | 89.78 |
| 475 | 89.61 |
| 480 | 89.79 |
| 485 | 90.01 |

(continued)

| Table 2A | |
|---|---|
| Wavelength (nm) | Transmittance (%) |
| 490 | 89.82 |
| 495 | 90.03 |
| 500 | 89.95 |
| 505 | 89.77 |
| 510 | 89.62 |
| 515 | 89.23 |
| 520 | 88.79 |
| 525 | 88.47 |
| 530 | 87.69 |
| 535 | 86.97 |
| 540 | 85.93 |
| 545 | 84.69 |
| 550 | 83.40 |
| 555 | 81.50 |
| 560 | 79.56 |
| 565 | 77.36 |
| 570 | 74.76 |
| 575 | 72.04 |
| 580 | 69.00 |
| 585 | 65.81 |
| 590 | 62.30 |
| 595 | 58.77 |
| 600 | 55.16 |
| 605 | 51.51 |
| 610 | 47.56 |
| 615 | 43.85 |
| 620 | 40.10 |
| 625 | 36.53 |
| 630 | 32.97 |
| 635 | 29.61 |
| 640 | 26.46 |
| 645 | 23.52 |
| 650 | 20.77 |
| 655 | 18.21 |
| 660 | 15.88 |
| 665 | 13.92 |
| 670 | 12.19 |
| 675 | 10.62 |

(continued)

| Table 2A | |
|---|---|
| Wavelength (nm) | Transmittance (%) |
| 680 | 9.19 |
| 685 | 7.90 |
| 690 | 6.85 |
| 695 | 5.90 |
| 700 | 5.09 |
| 705 | 4.42 |
| 710 | 3.84 |
| 715 | 3.29 |
| 720 | 2.86 |
| 725 | 2.50 |
| 730 | 2.21 |
| 735 | 1.93 |
| 740 | 1.69 |
| 745 | 1.51 |
| 750 | 1.35 |
| 755 | 1.21 |
| 760 | 1.08 |
| 765 | 0.99 |
| 770 | 0.90 |
| 775 | 0.83 |
| 780 | 0.78 |
| 785 | 0.71 |
| 790 | 0.68 |
| 795 | 0.62 |
| 800 | 0.63 |
| 805 | 0.56 |
| 810 | 0.59 |
| 815 | 0.54 |
| 820 | 0.54 |
| 825 | 0.52 |
| 830 | 0.49 |
| 835 | 0.52 |
| 840 | 0.52 |
| 845 | 0.64 |
| 850 | 0.00 |
| 855 | 0.00 |
| 860 | 0.01 |
| 865 | 0.47 |

(continued)

| Table 2A | |
|---|---|
| Wavelength (nm) | Transmittance (%) |
| 870 | 0.00 |
| 875 | 0.12 |
| 880 | 0.36 |
| 885 | 0.00 |
| 890 | 0.18 |
| 895 | 0.20 |
| 900 | 0.32 |
| 905 | 0.25 |
| 910 | 0.27 |
| 915 | 0.34 |
| 920 | 0.34 |
| 925 | 0.44 |
| 930 | 0.43 |
| 935 | 0.52 |
| 940 | 0.58 |
| 945 | 0.61 |
| 950 | 0.75 |
| 955 | 0.74 |
| 960 | 0.88 |
| 965 | 0.78 |
| 970 | 0.98 |
| 975 | 0.93 |
| 980 | 1.22 |
| 985 | 1.24 |
| 990 | 1.35 |
| 995 | 1.45 |
| 1000 | 1.53 |
| 1005 | 1.69 |
| 1010 | 1.83 |
| 1015 | 1.89 |
| 1020 | 2.04 |
| 1025 | 2.19 |
| 1030 | 2.35 |
| 1035 | 2.49 |
| 1040 | 2.70 |
| 1045 | 2.88 |
| 1050 | 2.99 |

Table 2B shows the values of parameters of the optical lens assembly of Example 1.

| Table 2B | | | |
|---|---|---|---|
| Wt50 (nm) | 607 | T85 (%) | 0.00 |
| T6065 (%) | 37.09 | T94 (%) | 0.58 |
| T6570 (%) | 11.50 | T105 (%) | 2.99 |
| T70105 (%) | 1.19 | | |

<Example 2>

The optical lens assembly of Example 2 includes at least four optical lens elements, the at least four optical lens elements include, in order from an object side of the optical lens assembly to an image side thereof, a first optical lens element, a second optical lens element, a third optical lens element and a fourth optical lens element, and the optical lens assembly of Example 2 includes a blue-glass lens element, a long-wavelength absorbing lens element and a long-wavelength filtering lens element.

The long-wavelength filtering lens element includes a long-wavelength filtering coating membrane, and the long-wavelength filtering coating membrane can be disposed on an object-side surface or an image-side surface of the long-wavelength filtering lens element. The long-wavelength filtering coating membrane includes at least one low refractive index layer and at least one high refractive index layer, and the long-wavelength filtering coating membrane is formed by alternately stacking the high refractive index layer and the low refractive index layer.

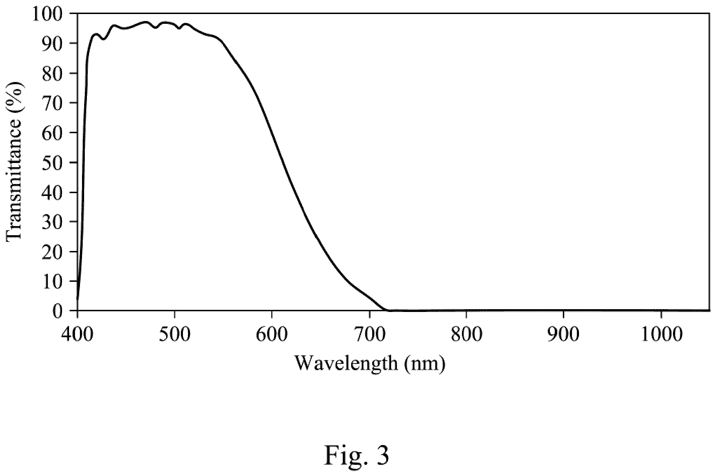

Fig. 3 is a relationship diagram between transmittances and wavelengths of an optical lens assembly according to Example 2, and Table 3A shows the values of transmittance in a wavelength range of 400 nm to 1050 nm of the optical lens assembly of Example 2.

| Table 3A | |
|---|---|
| Wavelength (nm) | Transmittance (%) |
| 400 | 3.88 |
| 405 | 26.02 |
| 410 | 81.61 |
| 415 | 91.72 |
| 420 | 93.03 |
| 425 | 91.62 |
| 430 | 92.54 |
| 435 | 95.16 |
| 440 | 95.53 |
| 445 | 95.19 |
| 450 | 95.19 |
| 455 | 95.97 |
| 460 | 96.09 |
| 465 | 96.44 |
| 470 | 96.72 |
| 475 | 95.99 |
| 480 | 95.42 |
| 485 | 96.35 |
| 490 | 96.65 |
| 495 | 96.77 |
| 500 | 95.95 |

(continued)

| Table 3A | |
| --- | --- |
| Wavelength (nm) | Transmittance (%) |
| 505 | 95.39 |
| 510 | 96.17 |
| 515 | 96.07 |
| 520 | 94.99 |
| 525 | 93.95 |
| 530 | 93.22 |
| 535 | 92.98 |
| 540 | 92.43 |
| 545 | 91.17 |
| 550 | 89.42 |
| 555 | 87.29 |
| 560 | 85.19 |
| 565 | 83.24 |
| 570 | 80.69 |
| 575 | 77.60 |
| 580 | 74.25 |
| 585 | 71.11 |
| 590 | 67.52 |
| 595 | 63.41 |
| 600 | 58.95 |
| 605 | 54.50 |
| 610 | 50.35 |
| 615 | 46.86 |
| 620 | 43.10 |
| 625 | 39.42 |
| 630 | 35.39 |
| 635 | 31.65 |
| 640 | 28.19 |
| 645 | 25.19 |
| 650 | 22.33 |
| 655 | 19.51 |
| 660 | 17.03 |
| 665 | 14.78 |
| 670 | 12.78 |
| 675 | 11.13 |
| 680 | 9.61 |
| 685 | 8.17 |
| 690 | 7.03 |

(continued)

| Table 3A | |
|---|---|
| Wavelength (nm) | Transmittance (%) |
| 695 | 5.97 |
| 700 | 4.33 |
| 705 | 2.76 |
| 710 | 1.66 |
| 715 | 0.72 |
| 720 | 0.19 |
| 725 | 0.07 |
| 730 | 0.03 |
| 735 | 0.02 |
| 740 | 0.02 |
| 745 | 0.02 |
| 750 | 0.01 |
| 755 | 0.01 |
| 760 | 0.01 |
| 765 | 0.01 |
| 770 | 0.00 |
| 775 | 0.01 |
| 780 | 0.01 |
| 785 | 0.01 |
| 790 | 0.01 |
| 795 | 0.01 |
| 800 | 0.00 |
| 805 | 0.01 |
| 810 | 0.01 |
| 815 | 0.01 |
| 820 | 0.00 |
| 825 | 0.01 |
| 830 | 0.00 |
| 835 | 0.01 |
| 840 | 0.00 |
| 845 | 0.02 |
| 850 | 0.00 |
| 855 | 0.00 |
| 860 | 0.00 |
| 865 | 0.00 |
| 870 | 0.00 |
| 875 | 0.00 |
| 880 | 0.00 |

(continued)

| Table 3A | |
| --- | --- |
| Wavelength (nm) | Transmittance (%) |
| 885 | 0.00 |
| 890 | 0.00 |
| 895 | 0.00 |
| 900 | 0.00 |
| 905 | 0.00 |
| 910 | 0.00 |
| 915 | 0.00 |
| 920 | 0.00 |
| 925 | 0.00 |
| 930 | 0.00 |
| 935 | 0.00 |
| 940 | 0.00 |
| 945 | 0.00 |
| 950 | 0.00 |
| 955 | 0.00 |
| 960 | 0.00 |
| 965 | 0.00 |
| 970 | 0.00 |
| 975 | 0.00 |
| 980 | 0.00 |
| 985 | 0.00 |
| 990 | 0.00 |
| 995 | 0.00 |
| 1000 | 0.00 |
| 1005 | 0.00 |
| 1010 | 0.00 |
| 1015 | 0.00 |
| 1020 | 0.00 |
| 1025 | 0.00 |
| 1030 | 0.00 |
| 1035 | 0.00 |
| 1040 | 0.00 |
| 1045 | 0.00 |
| 1050 | 0.00 |

Table 3B shows the values of parameters of the optical lens assembly of Example 2.

| Table 3B | | | |
| --- | --- | --- | --- |
| Wt50 (nm) | 611 | T85 (%) | 0.00 |

(continued)

| Table 3B | | | |
|---|---|---|---|
| T6065 (%) | 39.63 | T94 (%) | 0.00 |
| T6570 (%) | 12.06 | T105 (%) | 0.00 |
| T70105 (%) | 0.14 | | |

Table 3C shows the parameters of the long-wavelength filtering coating membrane of the long-wavelength filtering lens element in the optical lens assembly of Example 2, wherein tLs is a total number of layers of the long-wavelength filtering coating membrane, tTk is a total thickness of the long-wavelength filtering coating membrane, LtTk is a total thickness of the low refractive index layer, HtTk is a total thickness of the high refractive index layer, NL is a refractive index of the low refractive index layer, and NH is a refractive index of the high refractive index layer.

| Table 3C | | | |
|---|---|---|---|
| tLs | 46 | LtTk/HtTk | 1.61 |
| tTk (nm) | 5784 | NL | 1.46 |
| LtTk (nm) | 3571 | NH | 2.32 |
| HtTk (nm) | 2213 | NH-NL | 0.86 |

Table 3D shows the details of each layer of the long-wavelength filtering coating membrane of the long-wavelength filtering lens element of Example 2, wherein "H" represents high refractive index layers, and "L" represents low refractive index layers.

| Table 3D | | | |
|---|---|---|---|
| Layers | Material | Refractive index | Thickness (nm) |
| 1 | H | 2.32 | 11 |
| 2 | L | 1.46 | 38 |
| 3 | H | 2.32 | 114 |
| 4 | L | 1.46 | 171 |
| 5 | H | 2.32 | 101 |
| 6 | L | 1.46 | 167 |
| 7 | H | 2.32 | 111 |
| 8 | L | 1.46 | 186 |
| 9 | H | 2.32 | 117 |
| 10 | L | 1.46 | 190 |
| 11 | H | 2.32 | 117 |
| 12 | L | 1.46 | 194 |
| 13 | H | 2.32 | 118 |
| 14 | L | 1.46 | 190 |
| 15 | H | 2.32 | 118 |
| 16 | L | 1.46 | 194 |
| 17 | H | 2.32 | 117 |
| 18 | L | 1.46 | 189 |
| 19 | H | 2.32 | 117 |
| 20 | L | 1.46 | 190 |

(continued)

| Table 3D | | | |
|---|---|---|---|
| Layers | Material | Refractive index | Thickness (nm) |
| 21 | H | 2.32 | 113 |
| 22 | L | 1.46 | 170 |
| 23 | H | 2.32 | 93 |
| 24 | L | 1.46 | 154 |
| 25 | H | 2.32 | 92 |
| 26 | L | 1.46 | 148 |
| 27 | H | 2.32 | 89 |
| 28 | L | 1.46 | 143 |
| 29 | H | 2.32 | 88 |
| 30 | L | 1.46 | 147 |
| 31 | H | 2.32 | 86 |
| 32 | L | 1.46 | 145 |
| 33 | H | 2.32 | 85 |
| 34 | L | 1.46 | 144 |
| 35 | H | 2.32 | 86 |
| 36 | L | 1.46 | 144 |
| 37 | H | 2.32 | 86 |
| 38 | L | 1.46 | 146 |
| 39 | H | 2.32 | 85 |
| 40 | L | 1.46 | 147 |
| 41 | H | 2.32 | 87 |
| 42 | L | 1.46 | 146 |
| 43 | H | 2.32 | 92 |
| 44 | L | 1.46 | 152 |
| 45 | H | 2.32 | 90 |
| 46 | L | 1.46 | 75 |

The optical lens assemblies of the 1st design example to the 13th design example are provided for specific illustration, and the optical lens assembly of each of the 1st design example to the 13th design example is the applicable optical design of the optical lens assembly of Example 1 and the optical lens assembly of Example 2.

<1st design example>

The optical lens assembly of the 1st design example includes five optical lens elements, and the five optical lens elements are, in order from an object side of the optical lens assembly to an image side thereof, a first optical lens element, a second optical lens element, a third optical lens element, a fourth optical lens element and a fifth optical lens element. Each of the optical lens elements has an object-side surface facing the object side and an image-side surface facing the image side.

The first optical lens element is made of a plastic, and the first optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The second optical lens element is made of a plastic. The third optical lens element is made of a plastic, and the third optical lens element is the long-wavelength absorbing lens element. The fourth optical lens element is made of a plastic. The fifth optical lens element is made of a plastic.

Further, the material order of each of the optical lens elements in the optical lens assembly of the 1st design example is only for demonstration examples. To satisfy the use of the blue glass material and the long-wavelength absorbing material, the material of the optical lens element can be replaced and adjusted with the plastic or the glass.

Table 4 shows the parameters of the optical lens assembly of the 1st design example, wherein L1 to L5 respectively represent the first optical lens element to the fifth optical lens element, CPmax is a maximum of the optical paths of a chief ray in the all fields of view of the optical lens element, CPmin is a minimum of the optical paths of the chief ray in the all fields of view of the optical lens element, CPavg is an average of the optical paths of the chief ray in the all fields of view of the optical lens element, CPst is a standard deviation of the optical paths of the chief ray in the all fields of view of the optical lens element, N is a refractive index of the optical lens element (Wavelength = 587.6 nm), V is an Abbe number of the optical lens element (Wavelength = 587.6 nm), CT is a central thickness along an optical axis of the optical lens element, R1 is a radius of curvature on the optical axis of the object-side surface of the optical lens element, YR1 is a maximum effective diameter of the object-side surface of the optical lens element, SAGR1 is a maximum horizontal displacement on the object-side surface of the optical lens element, R2 is a radius of curvature on the optical axis of the image-side surface of the optical lens element, YR2 is a maximum effective diameter of the image-side surface of the optical lens element, SAGR2 is a maximum horizontal displacement on the image-side surface of the optical lens element, F is a total focal length of the optical lens assembly, FOV is a maximum field of view of the optical lens assembly, TD is an axial distance between the object-side surface of the first optical lens element and an image-side surface of a last one of the optical lens elements, ImgH is a maximum image height of the optical lens assembly, Fb1 is a first arranging factor of the blue-glass lens element, Fb2 is a second arranging factor of the blue-glass lens element, Fb3 is a third arranging factor of the blue-glass lens element, Fb4 is a fourth arranging factor of the blue-glass lens element, Fb5 is a fifth arranging factor of the blue-glass lens element, FB is a comprehensive arranging factor of the blue-glass lens element, FA is a main arranging factor of the long-wavelength absorbing lens element, Fam is a material arranging factor of the long-wavelength absorbing lens element, CTB is a central thickness along an optical axis of the blue-glass lens element, CTA is a central thickness along the optical axis of the long-wavelength absorbing lens element, FcR1 is a coating arranging factor of an object-side surface of the long-wavelength filtering lens element, FcR2 is a coating arranging factor of an image-side surface of the long-wavelength filtering lens element, FbcR1 is a merge arranging factor of an object-side surface of the blue-glass lens element, and FbcR2 is a merge arranging factor of an image-side surface of the blue-glass lens element.

| Table 4 | | | | | |
|---|---|---|---|---|---|
| | L1 | L2 | L3 | L4 | L5 |
| CPmax (mm) | 1.13 | 0.24 | 0.36 | 0.52 | 0.46 |
| CPmin (mm) | 1.12 | 0.24 | 0.24 | 0.30 | 0.39 |
| CPavq (mm) | 1.12 | 0.24 | 0.28 | 0.44 | 0.43 |
| CPst | 0.004 | 0.002 | 0.035 | 0.068 | 0.022 |
| N | 1.54 | 1.67 | 1.54 | 1.67 | 1.54 |
| V | 56.08 | 19.44 | 55.98 | 19.44 | 55.98 |
| CT (mm) | 1.12 | 0.24 | 0.24 | 0.52 | 0.40 |
| R1 (mm) | 1.69 | 3.62 | -6.00 | -4.55 | -2.14 |
| YR1 (mm) | 1.46 | 1.23 | 0.81 | 1.49 | 1.66 |
| SAGR1 (mm) | 0.76 | 0.15 | -0.12 | -0.23 | -0.40 |
| R2 (mm) | 32.68 | 1.98 | 5.69 | -2.52 | -3.87 |
| YR2(mm) | 1.35 | 1.04 | 0.94 | 1.59 | 1.76 |
| SAGR2 (mm) | -0.01 | 0.28 | 0.06 | -0.49 | -0.47 |
| F (mm) | 7.25 | | | | |
| FOV (degrees) | 31.38 | | | | |
| TD (mm) | 5.17 | | | | |
| ImgH (mm) | 2.04 | | | | |
| Fb1 = CPmax/CPmin | 1.01 | 1.03 | 1.50 | 1.71 | 1.17 |

(continued)

| Table 4 | | | | | |
|---|---|---|---|---|---|
| | L1 | L2 | L3 | L4 | L5 |
| Fb2 = (CPmax-CPmin)/CT | 0.01 | 0.03 | 0.50 | 0.41 | 0.17 |
| Fb3 = CPavg/CT | 1.00 | 1.01 | 1.15 | 0.85 | 1.08 |
| Fb4 = CPst/CT | 0.004 | 0.01 | 0.15 | 0.13 | 0.06 |
| Fb5 = CTITD | 0.216 | 0.045 | 0.046 | 0.100 | 0.077 |
| Arranging evaluation of blue glass | b | - | - | b | b |
| FB = LOG(1/(|Fb1-1|× |Fb3-1|×Fb2×Fb4)) | 8.51 | 7.14 | 2.25 | 2.24 | 3.88 |
| FA = LOG(1/(|(CPavg/CT-1)×CPst/CT)|) | 4.15 | 4.06 | 1.66 | 1.71 | 2.35 |
| Arranging evaluation of long-wavelength absorption | a | a | a | a | a |
| Fam = VIN | 36.30 | 11.65 | 36.26 | 11.65 | 36.26 |
| CTB/CTA | 4.66 | | | | |
| FcR1 = |YR1/SAGR1|×CT/TD×10 | 4.14 | 3.73 | 3.17 | 6.36 | 3.15 |
| Arranging evaluation of long-wavelength filtration | - | - | - | c | - |
| FcR2 = |YR2/SAGR2|×CT/TD×10 | 374.90 | 1.66 | 7.55 | 3.26 | 2.88 |
| Arranging evaluation of long-wavelength filtration | c | - | c | - | - |
| FbcR1 = |YR1/SAGR1|×CPavg/CT | 1.92 | 8.30 | 7.86 | 5.42 | 4.44 |
| FbcR2 = |YR2/SAGR2|×CPavg/CT | 174.11 | 3.68 | 18.70 | 2.78 | 4.06 |
| F/TD | 1.40 | | | | |
| F/ImgH | 3.55 | | | | |
| TD/ImgH | 2.53 | | | | |

In the 1st design example, the blue-glass lens element of the optical lens assembly is only for demonstration example, and the arrangement of the blue-glass lens element is determined based on the arranging evaluation of blue glass. In Table 4, "b" represents it meets the arranging evaluation of blue glass. If the optical lens element meets the arranging evaluation of blue glass, it represents that the optical lens element satisfies "$0.05 \leq Fb5 \leq 0.40$", and the optical lens element can be arranged as the blue-glass lens element. In the 1st design example, the long-wavelength absorbing lens element of the optical lens assembly is only for demonstration example, and the arrangement of the long-wavelength absorbing lens element is determined based on the arranging evaluation of long-wavelength absorption. In Table 4, "a" represents it meets the arranging evaluation of long-wavelength absorption. If the optical lens element meets the arranging evaluation of long-wavelength absorption, it represents that the optical lens element satisfies "$0.50 \leq FA$", and the optical lens element can be arranged as the long-wavelength absorbing lens element. In the 1st design example, the long-wavelength filtering lens element of the optical lens assembly is only for demonstration example, and the arrangement of the long-wavelength filtering lens element is determined based on the arranging evaluation of long-wavelength filtration. In Table 4, "c" represents it meets the arranging evaluation of long-wavelength filtration. If the optical lens element meets the arranging evaluation of long-wavelength filtration, it represents that the object-side surface of the optical lens element satisfies "$5.00 \leq FcR1$" or the image-side surface of the optical lens element satisfies "$5.00 \leq FcR2$", and the optical lens element can be arranged as the long-wavelength filtering lens element.

If the definitions of parameters shown in tables of the following examples are the same as those shown in Table 4, those will not be described again. Further, the blue-glass lens element, the long-wavelength absorbing lens element and the long-wavelength filtering lens element of the optical lens assembly of the following examples is only for demonstration examples, and the arrangements thereof are based on the arranging evaluation of blue glass, the arranging evaluation of long-wavelength absorption and the arranging evaluation of long-wavelength filtration. The definitions of the arranging evaluation of blue glass, the arranging evaluation of long-wavelength absorption and the arranging evaluation of long-wavelength filtration are also the same to those shown in the 1st design example, and those will not be described again.

<2nd design example>

The optical lens assembly of the 2nd design example includes six optical lens elements, and the six optical lens elements are, in order from an object side of the optical lens assembly to an image side thereof, a first optical lens element, a second optical lens element, a third optical lens element, a fourth optical lens element, a fifth optical lens element and a sixth optical lens element. Each of the optical lens elements has an object-side surface facing the object side and an image-side surface facing the image side.

The first optical lens element is made of a plastic, and the first optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The second optical lens element is made of a plastic. The third optical lens element is made of a plastic. The fourth optical lens element is made of a plastic. The fifth optical lens element is made of a plastic, and the fifth optical lens element is the long-wavelength absorbing lens element. The sixth optical lens element is made of a plastic.

Further, the material order of each of the optical lens elements in the optical lens assembly of the 2nd design example is only for demonstration examples. To satisfy the use of the blue glass material and the long-wavelength absorbing material, the material of the optical lens element can be replaced and adjusted with the plastic or the glass.

Table 5 shows the parameters of the optical lens assembly of the 2nd design example, wherein L1 to L6 respectively represent the first optical lens element to the sixth optical lens element.

| Table 5 | | | | | | |
|---|---|---|---|---|---|---|
| | L1 | L2 | L3 | L4 | L5 | L6 |
| CPmax (mm) | 0.95 | 0.42 | 0.53 | 0.39 | 0.85 | 1.54 |
| CPmin (mm) | 0.87 | 0.36 | 0.50 | 0.36 | 0.48 | 0.62 |
| CPavq (mm) | 0.90 | 0.38 | 0.52 | 0.37 | 0.65 | 1.12 |
| CPst | 0.026 | 0.019 | 0.012 | 0.008 | 0.130 | 0.325 |
| N | 1.54 | 1.67 | 1.54 | 1.59 | 1.54 | 1.53 |
| V | 56.08 | 19.45 | 55.52 | 28.30 | 55.98 | 55.92 |
| CT (mm) | 0.87 | 0.36 | 0.50 | 0.37 | 0.85 | 0.62 |
| R1 (mm) | 2.26 | 21.18 | 18.70 | 4.24 | 7.47 | -4.68 |
| YR1 (mm) | 1.55 | 1.44 | 1.34 | 2.14 | 2.96 | 3.94 |
| SAGR1 (mm) | 0.59 | 0.07 | -0.12 | -0.21 | -0.49 | -1.03 |
| R2 (mm) | 9.65 | 5.60 | 23.70 | 3.97 | -3.95 | 3.38 |
| YR2(mm) | 1.50 | 1.31 | 1.63 | 2.45 | 3.37 | 4.23 |
| SAGR2 (mm) | 0.05 | 0.22 | -0.26 | -0.19 | -0.85 | -0.98 |
| F (mm) | 6.00 | | | | | |
| FOV (degrees) | 81.68 | | | | | |
| TD (mm) | 5.81 | | | | | |
| ImqH (mm) | 5.26 | | | | | |
| Fb1 = CPmax/CPmin | 1.10 | 1.17 | 1.07 | 1.07 | 1.77 | 2.48 |
| Fb2 = (CPmax-CPmin)/CT | 0.10 | 0.17 | 0.07 | 0.07 | 0.43 | 1.48 |
| Fb3 = CPavg/CT | 1.04 | 1.06 | 1.04 | 1.02 | 0.76 | 1.81 |
| Fb4 = CPstICT | 0.03 | 0.05 | 0.02 | 0.02 | 0.15 | 0.53 |
| Fb5 = CT/TD | 0.150 | 0.061 | 0.086 | 0.063 | 0.147 | 0.106 |
| Arranging evaluation of blue glass | b | b | b | b | b | b |
| FB = LOG(1/(\|Fb1-1\|× \|Fb3-1\|×Fb2×Fb4)) | 4.99 | 3.99 | 5.36 | 5.59 | 1.92 | 0.03 |
| FA = LOG(1/(\|(CPavg/CT-1)×CPst/CT)\|) | 2.95 | 2.47 | 3.04 | 3.30 | 1.44 | 0.37 |

(continued)

| Table 5 | | | | | | |
|---|---|---|---|---|---|---|
| | L1 | L2 | L3 | L4 | L5 | L6 |
| Arranging evaluation of long-wavelength absorption | a | a | a | a | a | - |
| Fam = VIN | 36.30 | 11.65 | 35.96 | 17.83 | 36.26 | 36.46 |
| CTB/CTA | 1.02 | | | | | |
| FcR1 = \|YR1/SAGR1\|×CT/TD×10 | 3.92 | 11.79 | 10.02 | 6.37 | 8.82 | 4.08 |
| Arranging evaluation of long-wavelength filtration | - | c | c | c | c | - |
| FcR2 = \|YR2/SAGR2\|×CT/TD×10 | 43.25 | 3.66 | 5.47 | 8.05 | 5.80 | 4.61 |
| Arranging evaluation of long-wavelength filtration | c | - | c | c | c | - |
| FbcR1 = \|YR1/SAGR1\|×CPavg/CT | 2.71 | 20.46 | 12.09 | 10.38 | 4.59 | 6.94 |
| FbcR2 = \|YR2/SAGR2\|×CPavg/CT | 29.94 | 6.35 | 6.60 | 13.12 | 3.02 | 7.85 |
| FITD | 1.03 | | | | | |
| F/ImgH | 1.14 | | | | | |
| TD/ImgH | 1.10 | | | | | |

<3rd design example>

The optical lens assembly of the 3rd design example includes seven optical lens elements, and the seven optical lens elements are, in order from an object side of the optical lens assembly to an image side thereof, a first optical lens element, a second optical lens element, a third optical lens element, a fourth optical lens element, a fifth optical lens element, a sixth optical lens element and a seventh optical lens element. Each of the optical lens elements has an object-side surface facing the object side and an image-side surface facing the image side.

The first optical lens element is made of a glass, and the first optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The second optical lens element is made of a plastic. The third optical lens element is made of a plastic. The fourth optical lens element is made of a plastic, and the fourth optical lens element is the long-wavelength absorbing lens element. The fifth optical lens element is made of a plastic. The sixth optical lens element is made of a plastic. The seventh optical lens element is made of a plastic.

Further, the material order of each of the optical lens elements in the optical lens assembly of the 3rd design example is only for demonstration examples. To satisfy the use of the blue glass material and the long-wavelength absorbing material, the material of the optical lens element can be replaced and adjusted with the plastic or the glass.

Table 6 shows the parameters of the optical lens assembly of the 3rd design example, wherein L1 to L7 respectively represent the first optical lens element to the seventh optical lens element.

| Table 6 | | | | | | | |
|---|---|---|---|---|---|---|---|
| | L1 | L2 | L3 | L4 | L5 | L6 | L7 |
| CPmax (mm) | 1.48 | 0.39 | 0.46 | 0.75 | 0.60 | 1.01 | 1.57 |
| CPmin (mm) | 1.34 | 0.34 | 0.34 | 0.56 | 0.38 | 0.49 | 0.60 |
| CPavg (mm) | 1.39 | 0.36 | 0.38 | 0.72 | 0.51 | 0.66 | 1.15 |
| CPst | 0.044 | 0.017 | 0.037 | 0.048 | 0.082 | 0.167 | 0.338 |
| N | 1.51 | 1.67 | 1.67 | 1.54 | 1.57 | 1.54 | 1.53 |
| V | 73.05 | 19.45 | 19.45 | 55.98 | 37.44 | 55.98 | 55.96 |
| CT (mm) | 1.34 | 0.34 | 0.34 | 0.74 | 0.58 | 0.65 | 0.60 |
| R1 (mm) | 3.58 | 13.04 | -100.00 | 29.37 | 10.39 | 4.46 | 6.95 |
| YR1 (mm) | 2.47 | 2.20 | 2.06 | 2.55 | 3.21 | 4.45 | 5.82 |

(continued)

| Table 6 | | | | | | | |
|---|---|---|---|---|---|---|---|
| | L1 | L2 | L3 | L4 | L5 | L6 | L7 |
| SAGR1 (mm) | 0.95 | 0.25 | -0.33 | -0.05 | -0.80 | -0.92 | -1.32 |
| R2 (mm) | 10.10 | 10.56 | 34.97 | -74.10 | 7.32 | -58.23 | 2.28 |
| YR2(mm) | 2.33 | 2.05 | 2.34 | 2.70 | 3.82 | 4.93 | 6.15 |
| SAGR2 (mm) | 0.19 | 0.25 | -0.24 | -0.47 | -0.82 | -1.07 | -1.24 |
| F (mm) | 8.52 | | | | | | |
| FOV (degrees) | 86.06 | | | | | | |
| TD (mm) | 8.04 | | | | | | |
| ImgH (mm) | 8.16 | | | | | | |
| Fb1 = CPmax/CPmin | 1.10 | 1.17 | 1.36 | 1.34 | 1.59 | 2.06 | 2.62 |
| Fb2 = (CPmax-CPmin)/CT | 0.10 | 0.17 | 0.36 | 0.25 | 0.38 | 0.80 | 1.62 |
| Fb3 = CPavg/CT | 1.04 | 1.06 | 1.12 | 0.97 | 0.89 | 1.01 | 1.91 |
| Fb4 = CPst/CT | 0.03 | 0.05 | 0.11 | 0.06 | 0.14 | 0.26 | 0.56 |
| Fb5 = CT/TD | 0.167 | 0.042 | 0.042 | 0.093 | 0.072 | 0.081 | 0.075 |
| Arranging evaluation of blue glass | b | - | - | b | b | b | b |
| FB = LOG(1/(\|Fb1-1\|× \|Fb3-1\|×Fb2×Fb4)) | 4.85 | 4.05 | 2.76 | 3.78 | 2.44 | 2.54 | -0.13 |
| FA = LOG(1/(\|(CPavg/CT-1)× CPst/CT)\|) | 2.87 | 2.49 | 1.87 | 2.72 | 1.80 | 2.47 | 0.29 |
| Arranging evaluation of long-wavelength absorption | a | a | a | a | a | a | - |
| Fam = VIN | 48.34 | 11.65 | 11.65 | 36.26 | 23.91 | 36.26 | 36.48 |
| CTB/CTA | 1.80 | | | | | | |
| FcR1 = \|YR1/SAGR1\|× CT/TD×10 | 4.34 | 3.71 | 2.68 | 46.20 | 2.85 | 3.90 | 3.29 |
| Arranging evaluation of lonq-wavelenqth filtration | - | - | - | c | - | - | - |
| FcR2 = \|YR2/SAGR2\|× CT/TD×10 | 20.32 | 3.43 | 4.21 | 5.38 | 3.33 | 3.72 | 3.72 |
| Arranging evaluation of long-wavelength filtration | c | - | - | c | - | - | - |
| FbcR1 = \|YR1/SAGR1\|× CPavg/CT | 2.71 | 9.46 | 7.10 | 48.40 | 3.54 | 4.88 | 8.43 |
| FbcR2 = \|YR2/SAGR2\|× CPavq/CT | 12.68 | 8.75 | 11.17 | 5.64 | 4.13 | 4.66 | 9.52 |
| FITD | 1.06 | | | | | | |
| F/ImgH | 1.04 | | | | | | |
| TD/ImgH | 0.98 | | | | | | |

<4th design example>

The optical lens assembly of the 4th design example includes eight optical lens elements, and the eight optical lens elements are, in order from an object side of the optical lens assembly to an image side thereof, a first optical lens element, a second optical lens element, a third optical lens element, a fourth optical lens element, a fifth optical lens element, a sixth optical lens element, a seventh optical lens element and an eighth optical lens element. Each of the optical lens elements has an object-side surface facing the object side and an image-side surface facing the image side.

The first optical lens element is made of a plastic, and the first optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The second optical lens element is made of a plastic. The third optical lens element is made of a plastic. The fourth optical lens element is made of a plastic. The fifth optical lens element is made of a plastic, and the fifth optical lens element is the long-wavelength absorbing lens element. The sixth optical lens element

31

is made of a plastic. The seventh optical lens element is made of a plastic. The eighth optical lens element is made of a plastic.

Further, the material order of each of the optical lens elements in the optical lens assembly of the 4th design example is only for demonstration examples. To satisfy the use of the blue glass material and the long-wavelength absorbing material, the material of the optical lens element can be replaced and adjusted with the plastic or the glass.

Table 7 shows the parameters of the optical lens assembly of the 4th design example, wherein L1 to L8 respectively represent the first optical lens element to the eighth optical lens element.

| Table 7 | | | | | | | | |
|---|---|---|---|---|---|---|---|---|
| | L1 | L2 | L3 | L4 | L5 | L6 | L7 | L8 |
| CPmax (mm) | 1.06 | 0.34 | 0.38 | 0.50 | 0.43 | 0.58 | 0.58 | 1.34 |
| CPmin (mm) | 0.99 | 0.30 | 0.32 | 0.47 | 0.41 | 0.41 | 0.50 | 0.60 |
| CPavq (mm) | 1.02 | 0.32 | 0.34 | 0.49 | 0.42 | 0.45 | 0.54 | 1.03 |
| CPst | 0.024 | 0.014 | 0.020 | 0.009 | 0.007 | 0.032 | 0.030 | 0.261 |
| N | 1.54 | 1.67 | 1.67 | 1.54 | 1.54 | 1.57 | 1.54 | 1.53 |
| V | 56.08 | 19.45 | 19.45 | 55.98 | 55.98 | 37.44 | 55.98 | 55.92 |
| CT (mm) | 0.99 | 0.30 | 0.32 | 0.48 | 0.42 | 0.44 | 0.58 | 0.60 |
| R1 (mm) | 2.51 | 10.68 | 22.29 | -42.29 | 18.28 | 11.21 | 2.89 | -8.19 |
| YR1 (mm) | 1.83 | 1.75 | 1.60 | 1.73 | 2.14 | 2.71 | 3.50 | 4.48 |
| SAGR1 (mm) | 0.80 | 0.22 | -0.09 | -0.10 | -0.17 | -0.76 | -0.79 | -1.35 |
| R2 (mm) | 11.65 | 5.33 | 13.48 | -15.74 | 28.11 | 6.13 | 9.22 | 4.20 |
| YR2(mm) | 1.78 | 1.60 | 1.68 | 1.92 | 2.41 | 3.20 | 3.82 | 4.79 |
| SAGR2 (mm) | 0.12 | 0.34 | 0.02 | -0.24 | -0.24 | -0.75 | -0.95 | -1.46 |
| F (mm) | 6.80 | | | | | | | |
| FOV (degrees) | 82.70 | | | | | | | |
| TD (mm) | 6.70 | | | | | | | |
| ImgH (mm) | 6.13 | | | | | | | |
| Fb1 = CPmax/CPmin | 1.08 | 1.15 | 1.20 | 1.08 | 1.06 | 1.40 | 1.17 | 2.24 |
| Fb2 = (CPmax-CPmin)/CT | 0.08 | 0.15 | 0.20 | 0.08 | 0.06 | 0.38 | 0.15 | 1.24 |
| Fb3 = CPavg/CT | 1.03 | 1.06 | 1.07 | 1.02 | 1.00 | 1.02 | 0.94 | 1.72 |
| Fb4 = CPstICT | 0.02 | 0.05 | 0.06 | 0.02 | 0.02 | 0.07 | 0.05 | 0.44 |
| Fb5 = CT/TD | 0.147 | 0.045 | 0.048 | 0.072 | 0.063 | 0.066 | 0.086 | 0.090 |
| Arranging evaluation of blue glass | b | - | - | b | b | b | b | b |
| FB = LOG(1/(\|Fb1-1\|× \|Fb3-1\|×Fb2×Fb4)) | 5.34 | 4.25 | 3.76 | 5.61 | 6.60 | 3.59 | 4.12 | 0.32 |
| FA = LOG(1/(\|(CPavg/CT-1)× CPst/CT)\|) | 3.11 | 2.59 | 2.35 | 3.41 | 4.10 | 2.77 | 2.52 | 0.51 |
| Arranging evaluation of long-wavelength absorption | a | a | a | a | a | a | a | a |
| Fam = VIN | 36.30 | 11.65 | 11.65 | 36.26 | 36.26 | 23.91 | 36.26 | 36.46 |
| CTB/CTA | 2.35 | | | | | | | |
| FcR1 = \|YR1/SAGR1\|× CT/TD×10 | 3.35 | 3.62 | 8.99 | 12.09 | 7.88 | 2.34 | 3.78 | 2.97 |
| Arranging evaluation of long-wavelength filtration | - | - | c | c | c | - | - | - |

(continued)

| Table 7 | | | | | | | | |
|---|---|---|---|---|---|---|---|---|
| | L1 | L2 | L3 | L4 | L5 | L6 | L7 | L8 |
| FcR2 = \|YR2/SAGR2\|× CT/TD×10 | 22.27 | 2.12 | 47.67 | 5.63 | 6.28 | 2.79 | 3.45 | 2.95 |
| Arranging evaluation of long-wavelength filtration | c | - | c | c | c | - | - | - |
| FbcR1 = \|YR1/SAGR1\|× CPavg/CT | 2.35 | 8.54 | 20.18 | 17.19 | 12.63 | 3.65 | 4.15 | 5.70 |
| FbcR2 = \|YR2/SAGR2\|× CPavg/CT | 15.62 | 5.00 | 107.01 | 8.00 | 10.07 | 4.35 | 3.79 | 5.65 |
| FITD | 1.01 | | | | | | | |
| F/ImgH | 1.11 | | | | | | | |
| TD/ImgH | 1.09 | | | | | | | |

<5th design example>

The optical lens assembly of the 5th design example includes nine optical lens elements, and the nine optical lens elements are, in order from an object side of the optical lens assembly to an image side thereof, a first optical lens element, a second optical lens element, a third optical lens element, a fourth optical lens element, a fifth optical lens element, a sixth optical lens element, a seventh optical lens element, an eighth optical lens element and a ninth optical lens element. Each of the optical lens elements has an object-side surface facing the object side and an image-side surface facing the image side.

The first optical lens element is made of a plastic, and the first optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The second optical lens element is made of a plastic. The third optical lens element is made of a plastic. The fourth optical lens element is made of a plastic. The fifth optical lens element is made of a plastic, and the fifth optical lens element is the long-wavelength absorbing lens element. The sixth optical lens element is made of a plastic. The seventh optical lens element is made of a plastic. The eighth optical lens element is made of a plastic. The ninth optical lens element is made of a plastic.

Further, the material order of each of the optical lens elements in the optical lens assembly of the 5th design example is only for demonstration examples. To satisfy the use of the blue glass material and the long-wavelength absorbing material, the material of the optical lens element can be replaced and adjusted with the plastic or the glass.

Table 8 shows the parameters of the optical lens assembly of the 5th design example, wherein L1 to L9 respectively represent the first optical lens element to the ninth optical lens element.

| Table 8 | | | | | | | | | |
|---|---|---|---|---|---|---|---|---|---|
| | L1 | L2 | L3 | L4 | L5 | L6 | L7 | L8 | L9 |
| CPmax (mm) | 1.11 | 0.37 | 0.41 | 0.50 | 0.44 | 0.47 | 0.63 | 0.72 | 1.39 |
| CPmin (mm) | 1.03 | 0.32 | 0.33 | 0.47 | 0.43 | 0.43 | 0.48 | 0.67 | 0.68 |
| CPavg (mm) | 1.06 | 0.33 | 0.36 | 0.49 | 0.43 | 0.45 | 0.51 | 0.70 | 1.08 |
| CPst | 0.028 | 0.017 | 0.023 | 0.011 | 0.005 | 0.011 | 0.040 | 0.020 | 0.241 |
| N | 1.54 | 1.61 | 1.69 | 1.54 | 1.54 | 1.57 | 1.57 | 1.54 | 1.53 |
| V | 56.08 | 25.97 | 18.38 | 55.98 | 55.98 | 37.44 | 37.44 | 55.98 | 55.92 |
| CT (mm) | 1.03 | 0.32 | 0.33 | 0.47 | 0.43 | 0.44 | 0.50 | 0.69 | 0.68 |
| R1 (mm) | 2.79 | 15.62 | 14.53 | 23.50 | 198.12 | -11.45 | 6.43 | 3.20 | -9.10 |
| YR1 (mm) | 1.95 | 1.90 | 1.76 | 1.91 | 2.30 | 2.61 | 3.35 | 4.25 | 5.46 |
| SAGR1 (mm) | 0.82 | 0.20 | -0.06 | 0.05 | -0.17 | -0.59 | -0.71 | -1.02 | -1.40 |

(continued)

| Table 8 | | | | | | | | | |
|---|---|---|---|---|---|---|---|---|---|
| | L1 | L2 | L3 | L4 | L5 | L6 | L7 | L8 | L9 |
| R2 (mm) | 20.73 | 5.03 | 11.88 | 79.12 | -21.57 | -29.04 | 7.02 | 4.83 | 6.26 |
| YR2(mm) | 1.92 | 1.75 | 1.85 | 2.06 | 2.54 | 3.05 | 3.80 | 4.56 | 5.72 |
| SAGR2 (mm) | 0.10 | 0.40 | 0.05 | -0.09 | -0.27 | -0.53 | -0.87 | -1.24 | -1.52 |
| F (mm) | 7.62 | | | | | | | | |
| FOV (degrees) | 84.69 | | | | | | | | |
| TD (mm) | 7.80 | | | | | | | | |
| ImgH (mm) | 7.15 | | | | | | | | |
| Fb1 = CPmax/CPmin | 1.08 | 1.17 | 1.22 | 1.06 | 1.04 | 1.08 | 1.33 | 1.08 | 2.03 |
| Fb2 = (CPmax-CPmin)/CT | 0.08 | 0.17 | 0.22 | 0.06 | 0.04 | 0.08 | 0.31 | 0.07 | 1.03 |
| Fb3 = CPavg/CT | 1.03 | 1.06 | 1.08 | 1.03 | 1.01 | 1.03 | 1.03 | 1.02 | 1.58 |
| Fb4 = CPst/CT | 0.03 | 0.05 | 0.07 | 0.02 | 0.01 | 0.03 | 0.08 | 0.03 | 0.35 |
| Fb5 = CT/TD | 0.132 | 0.040 | 0.043 | 0.060 | 0.055 | 0.056 | 0.063 | 0.088 | 0.088 |
| Arranging evaluation of blue glass | b | - | - | b | b | b | b | b | b |
| FB = LOG(1/(\|Fb1-1\|× \| Fb3-1\|×Fb2×Fb4)) | 5.19 | 4.04 | 3.59 | 5.49 | 6.53 | 5.32 | 3.66 | 5.59 | 0.67 |
| FA = LOG(1/(\| (CPavg/CT-1)× CPst/CT)\|) | 3.04 | 2.49 | 2.29 | 3.11 | 3.80 | 3.49 | 2.67 | 3.33 | 0.69 |
| Arranging evaluation of long-wavelength absorption | a | a | a | a | a | a | a | a | a |
| Fam = VIN | 36.30 | 16.09 | 10.90 | 36.26 | 36.26 | 23.91 | 23.91 | 36.26 | 36.46 |
| CTB/CTA | 2.41 | | | | | | | | |
| FcR1 = \|YR1/SAGR1\|× CT/TD×10 | 3.15 | 3.81 | 11.93 | 21.48 | 7.59 | 2.48 | 2.98 | 3.68 | 3.42 |
| Arranging evaluation of long-wavelength filtration | - | - | c | c | c | - | - | - | - |
| FcR2 = \|YR2/SAGR2\|× GT/TD×10 | 26.18 | 1.75 | 14.56 | 13.51 | 5.10 | 3.24 | 2.76 | 3.25 | 3.31 |
| Arranging evaluation of long-wavelength filtration | c | | c | c | c | - | - | - | - |
| FbcR1 = \|YR1/SAGR1\|× CPavg/CT | 2.47 | 10.02 | 30.17 | 36.82 | 14.12 | 4.57 | 4.82 | 4.23 | 6.14 |
| FbcR2 = \|YR2/SAGR2\|× CPavq/CT | 20.57 | 4.61 | 36.81 | 23.16 | 9.47 | 5.99 | 4.46 | 3.74 | 5.95 |
| F/TD | 0.98 | | | | | | | | |
| F/ImgH | 1.07 | | | | | | | | |
| TD/ImgH | 1.09 | | | | | | | | |

<6th design example>

The optical lens assembly of the 6th design example includes four optical lens elements, and the four optical lens elements are, in order from an object side of the optical lens assembly to an image side thereof, a first optical lens element, a second optical lens element, a third optical lens element and a fourth optical lens element. Each of the optical lens elements has an object-side surface facing the object side and an image-side surface facing the image side.

The first optical lens element is made of a glass, and the first optical lens element is the blue-glass lens element. The second optical lens element is made of a plastic, and the second optical lens element is the long-wavelength filtering lens element and the long-wavelength absorbing lens element, wherein the long-wavelength filtering lens element includes a long-wavelength filtering coating membrane, and the long-wavelength filtering coating membrane is disposed on an image-side surface of the long-wavelength filtering lens element. The third optical lens element is made of a plastic. The fourth optical lens element is made of a plastic.

Further, the material order of each of the optical lens elements in the optical lens assembly of the 6th design example is only for demonstration examples. To satisfy the use of the blue glass material and the long-wavelength absorbing material, the material of the optical lens element can be replaced and adjusted with the plastic or the glass.

Table 9 shows the parameters of the optical lens assembly of the 6th design example, wherein L1 to L4 respectively represent the first optical lens element to the fourth optical lens element.

| Table 9 | | | | |
|---|---|---|---|---|
| | L1 | L2 | L3 | L4 |
| CPmax (mm) | 1.14 | 0.40 | 0.40 | 0.74 |
| CPmin (mm) | 1.14 | 0.38 | 0.39 | 0.74 |
| CPavg (mm) | 1.14 | 0.39 | 0.39 | 0.74 |
| CPst | 0.001 | 0.004 | 0.004 | 0.001 |
| N | 1.81 | 1.54 | 1.64 | 1.53 |
| V | 40.73 | 55.98 | 23.49 | 55.96 |
| CT (mm) | 1.14 | 0.38 | 0.39 | 0.74 |
| R1 (mm) | 9.00 | -6.05 | 11.47 | 8.28 |
| YR1 (mm) | 2.67 | 2.42 | 2.30 | 2.21 |
| SAGR1 (mm) | 0.42 | -0.52 | 0.03 | 0.10 |
| R2 (mm) | -7.54 | 14.82 | 2.78 | -6.18 |
| YR2(mm) | 2.59 | 2.34 | 2.21 | 2.18 |
| SAGR2 (mm) | -0.30 | -0.06 | 0.50 | -0.37 |
| F (mm) | 13.59 | | | |
| FOV (degrees) | 33.14 | | | |
| TD (mm) | 3.76 | | | |
| ImgH (mm) | 4.06 | | | |
| Fb1 = CPmax/CPmin | 1.00 | 1.03 | 1.03 | 1.00 |
| Fb2 = (CPmax-CPmin)/CT | 0.004 | 0.03 | 0.03 | 0.003 |
| Fb3 = CPavg/CT | 1.00 | 1.01 | 1.01 | 1.00 |
| Fb4 = CPst/CT | 0.001 | 0.01 | 0.01 | 0.001 |
| Fb5 = CT/TD | 0.304 | 0.102 | 0.103 | 0.196 |
| Arranging evaluation of blue glass | b | b | b | b |
| FB = LOG(1/(\|Fb1-1\|$\times$ \|Fb3-1\|$\times$Fb2$\times$Fb4)) | 10.60 | 7.02 | 7.10 | 11.28 |
| FA = LOG(1/(\|(CPavg/CT-1)$\times$CPst/CT)\|) | 5.85 | 4.00 | 4.04 | 6.23 |
| Arranging evaluation of long-wavelength absorption | a | a | a | a |

(continued)

| Table 9 | | | | |
|---|---|---|---|---|
| | L1 | L2 | L3 | L4 |
| Fam = VIN | 22.55 | 36.26 | 14.34 | 36.48 |
| CTB/CTA | 2.97 | | | |
| FcR1 = |YR1/SAGR1|×CT/TD×10 | 19.50 | 4.77 | 68.71 | 43.27 |
| Arranging evaluation of long-wavelength filtration | c | - | c | c |
| FcR2 = |YR2/SAGR2|×CT/TD×10 | 25.95 | 40.72 | 4.56 | 11.56 |
| Arranging evaluation of long-wavelength filtration | c | c | - | c |
| FbcR1 = |YR1/SAGR1|×CPavg/CT | 6.42 | 4.72 | 67.23 | 22.02 |
| FbcR2 = |YR2/SAGR2|×CPavg/CT | 8.54 | 40.28 | 4.46 | 5.89 |
| F/TD | 3.62 | | | |
| F/ImqH | 3.35 | | | |
| TD/ImgH | 0.93 | | | |

<7th design example>

The optical lens assembly of the 7th design example includes six optical lens elements, and the six optical lens elements are, in order from an object side of the optical lens assembly to an image side thereof, a first optical lens element, a second optical lens element, a third optical lens element, a fourth optical lens element, a fifth optical lens element and a sixth optical lens element. Each of the optical lens elements has an object-side surface facing the object side and an image-side surface facing the image side.

The first optical lens element is made of a glass, and the first optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The second optical lens element is made of a plastic. The third optical lens element is made of a plastic. The fourth optical lens element is made of a plastic, and the fourth optical lens element is the long-wavelength absorbing lens element. The fifth optical lens element is made of a plastic. The sixth optical lens element is made of a plastic.

Further, the material order of each of the optical lens elements in the optical lens assembly of the 7th design example is only for demonstration examples. To satisfy the use of the blue glass material and the long-wavelength absorbing material, the material of the optical lens element can be replaced and adjusted with the plastic or the glass.

Table 10 shows the parameters of the optical lens assembly of the 7th design example, wherein L1 to L6 respectively represent the first optical lens element to the sixth optical lens element.

| Table 10 | | | | | | |
|---|---|---|---|---|---|---|
| | L1 | L2 | L3 | L4 | L5 | L6 |
| CPmax (mm) | 2.04 | 1.07 | 3.05 | 0.72 | 0.88 | 0.88 |
| CPmin (mm) | 1.88 | 1.04 | 3.00 | 0.64 | 0.86 | 0.65 |
| CPavg (mm) | 1.99 | 1.05 | 3.02 | 0.67 | 0.87 | 0.73 |
| CPst | 0.049 | 0.010 | 0.016 | 0.023 | 0.004 | 0.073 |
| N | 1.50 | 1.59 | 1.54 | 1.54 | 1.59 | 1.53 |
| V | 81.56 | 28.30 | 67.80 | 56.08 | 28.30 | 55.96 |
| CT (mm) | 2.04 | 1.04 | 3.00 | 0.64 | 0.88 | 0.65 |
| R1 (mm) | 7.84 | 8.17 | 9.94 | -4.45 | 6.34 | -2.70 |
| YR1 (mm) | 4.80 | 4.15 | 3.91 | 3.65 | 3.44 | 3.73 |
| SAGR1 (mm) | 1.58 | 0.21 | 0.38 | 0.07 | 0.38 | -2.07 |

(continued)

| Table 10 | | | | | | |
|---|---|---|---|---|---|---|
| | L1 | L2 | L3 | L4 | L5 | L6 |
| R2 (mm) | 26.81 | 4.21 | -8.96 | -6.07 | 6.47 | -3.69 |
| YR2(mm) | 4.62 | 3.90 | 3.96 | 3.43 | 3.52 | 4.12 |
| SAGR2 (mm) | 0.35 | 0.99 | -1.06 | 0.52 | 0.12 | -1.58 |
| F (mm) | 18.59 | | | | | |
| FOV (degrees) | 33.96 | | | | | |
| TD (mm) | 16.32 | | | | | |
| ImgH (mm) | 5.72 | | | | | |
| Fb1 = CPmax/CPmin | 1.09 | 1.03 | 1.02 | 1.12 | 1.02 | 1.36 |
| Fb2 = (CPmax-CPmin)/CT | 0.08 | 0.03 | 0.02 | 0.12 | 0.02 | 0.36 |
| Fb3 = CPavg/CT | 0.97 | 1.01 | 1.01 | 1.03 | 1.00 | 1.12 |
| Fb4 = CPstICT | 0.02 | 0.01 | 0.01 | 0.04 | 0.005 | 0.11 |
| Fb5 = CT/TD | 0.125 | 0.064 | 0.184 | 0.039 | 0.054 | 0.040 |
| Arranging evaluation of blue glass | b | b | b | - | b | - |
| FB = LOG(1/(\|Fb1-1\|× \|Fb3-1\|×Fb2×Fb4)) | 5.38 | 6.98 | 8.08 | 4.79 | 9.73 | 2.75 |
| FA = LOG(1/(1(CPavg/CT-1)×CPst/CT)\|) | 3.20 | 3.98 | 4.52 | 2.92 | 6.24 | 1.86 |
| Arranging evaluation of long-wavelength absorption | a | a | a | a | a | a |
| Fam = VIN | 54.48 | 17.83 | 44.08 | 36.30 | 17.83 | 36.48 |
| CTB/CTA | 3.18 | | | | | |
| FcR1 = \|YR1/SAGR1\|×CT/TD×10 | 3.81 | 12.31 | 19.07 | 19.56 | 4.80 | 0.72 |
| Arranging evaluation of long-wavelength filtration | - | c | c | c | - | - |
| FcR2 = \|YR2/SAGR2\|×CT/TD×10 | 16.36 | 2.50 | 6.87 | 2.62 | 16.41 | 1.04 |
| Arranging evaluation of long-wavelength filtration | c | - | c | - | c | - |
| FbcR1 = \|YR1/SAGR1\|×CPavg/CT | 2.97 | 19.55 | 10.43 | 51.34 | 8.96 | 2.02 |
| FbcR2 = \|YR2/SAGR2\|x CPavq/CT | 12.73 | 3.97 | 3.76 | 6.87 | 30.60 | 2.93 |
| FITD | 1.14 | | | | | |
| F/ImgH | 3.25 | | | | | |
| TD/ImgH | 2.85 | | | | | |

<8th design example>

The optical lens assembly of the 8th design example includes seven optical lens elements, and the seven optical lens elements are, in order from an object side of the optical lens assembly to an image side thereof, a first optical lens element, a second optical lens element, a third optical lens element, a fourth optical lens element, a fifth optical lens element, a sixth optical lens element and a seventh optical lens element. Each of the optical lens elements has an object-side surface facing the object side and an image-side surface facing the image side.

The first optical lens element is made of a glass, and the first optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The second optical lens element is made of a plastic. The third optical lens element is made of a plastic. The fourth optical lens element is made of a plastic, and the fourth optical lens element is the long-wavelength absorbing lens element. The fifth optical lens element is made of a plastic. The sixth optical lens element is made of a plastic. The seventh optical lens element is made of a plastic.

Further, the material order of each of the optical lens elements in the optical lens assembly of the 8th design example is only for demonstration examples. To satisfy the use of the blue glass material and the long-wavelength absorbing material, the material of the optical lens element can be replaced and adjusted with the plastic or the glass.

Table 11 shows the parameters of the optical lens assembly of the 8th design example, wherein L1 to L7 respectively represent the first optical lens element to the seventh optical lens element.

| Table 11 | | | | | | | |
|---|---|---|---|---|---|---|---|
| | L1 | L2 | L3 | L4 | L5 | L6 | L7 |
| CPmax (mm) | 1.15 | 0.29 | 0.37 | 0.82 | 0.39 | 0.56 | 1.13 |
| CPmin (mm) | 1.08 | 0.25 | 0.28 | 0.65 | 0.28 | 0.37 | 0.44 |
| CPavq (mm) | 1.11 | 0.26 | 0.31 | 0.79 | 0.35 | 0.44 | 0.81 |
| CPst | 0.023 | 0.012 | 0.028 | 0.041 | 0.040 | 0.057 | 0.244 |
| N | 1.59 | 1.67 | 1.67 | 1.54 | 1.57 | 1.54 | 1.53 |
| V | 67.00 | 19.44 | 19.44 | 55.98 | 37.44 | 55.98 | 55.92 |
| CT (mm) | 1.08 | 0.25 | 0.28 | 0.81 | 0.37 | 0.52 | 0.44 |
| R1 (mm) | 2.44 | 5.74 | 9.21 | 49.00 | 13.33 | 2.03 | -25.75 |
| YR1 (mm) | 1.85 | 1.63 | 1.46 | 1.76 | 2.12 | 2.54 | 3.46 |
| SAGR1 (mm) | 0.91 | 0.23 | -0.19 | -0.01 | -0.54 | -0.57 | -0.97 |
| R2 (mm) | 6.21 | 4.42 | 6.05 | -12.25 | 3.95 | 300.00 | 2.46 |
| YR2(mm) | 1.69 | 1.48 | 1.62 | 1.94 | 2.45 | 2.98 | 3.67 |
| SAGR2 (mm) | 0.21 | 0.26 | -0.03 | -0.51 | -0.50 | -0.68 | -0.96 |
| F (mm) | 5.33 | | | | | | |
| FOV (degrees) | 80.26 | | | | | | |
| TD (mm) | 5.59 | | | | | | |
| ImqH (mm) | 4.60 | | | | | | |
| Fb1 = CPmax/CPmin | 1.07 | 1.15 | 1.33 | 1.26 | 1.41 | 1.51 | 2.56 |
| Fb2 = (CPmax-CPmin)/CT | 0.07 | 0.15 | 0.33 | 0.21 | 0.31 | 0.36 | 1.56 |
| Fb3 = CPavq/CT | 1.03 | 1.06 | 1.11 | 0.98 | 0.95 | 0.84 | 1.85 |
| Fb4 = CPst/CT | 0.02 | 0.05 | 0.10 | 0.05 | 0.11 | 0.11 | 0.55 |
| Fb5 = CT/TD | 0.193 | 0.045 | 0.050 | 0.144 | 0.066 | 0.093 | 0.079 |
| Arranging evaluation of blue glass | b | - | b | b | b | b | b |
| FB = LOG(1/(\|Fb1-1\|× \|Fb3-1\|×Fb2×Fb4)) | 5.58 | 4.20 | 2.93 | 4.26 | 3.12 | 2.51 | -0.06 |
| FA = LOG(1/(\|(CPavg/CT-1)x CPst/CT)I) | 3.24 | 2.57 | 1.97 | 3.00 | 2.22 | 1.77 | 0.33 |
| Arranging evaluation of long-wavelength absorption | a | a | a | a | a | a | - |
| Fam = V/N | 42.05 | 11.65 | 11.65 | 36.26 | 23.91 | 36.26 | 36.46 |
| CTB/CTA | 1.34 | | | | | | |
| FcR1 = \|YR1/SAGR1\|× CT/TD×10 | 3.94 | 3.21 | 3.79 | 209.52 | 2.60 | 4.12 | 2.82 |
| Arranging evaluation of lonq-wavelenqth filtration | - | - | - | c | - | - | - |
| FcR2 = \|YR2/SAGR2\|× CT/TDx10 | 15.25 | 2.59 | 24.05 | 5.47 | 3.21 | 4.06 | 2.99 |
| Arranging evaluation of long-wavelength filtration | c | - | c | c | - | - | - |
| FbcR1 = \|YR1/SAGR1\|× CPavg/CT | 2.10 | 7.58 | 8.38 | 142.53 | 3.73 | 3.73 | 6.62 |
| FbcR2 = \|YR2/SAGR2\|x CPavq/CT | 8.12 | 6.13 | 53.17 | 3.72 | 4.61 | 3.67 | 7.02 |
| FITD | 0.95 | | | | | | |

(continued)

| Table 11 | | | | | | | |
|---|---|---|---|---|---|---|---|
| | L1 | L2 | L3 | L4 | L5 | L6 | L7 |
| F/ImgH | 1.16 | | | | | | |
| TD/ImgH | 1.22 | | | | | | |

<9th design example>

The optical lens assembly of the 9th design example includes eight optical lens elements, and the eight optical lens elements are, in order from an object side of the optical lens assembly to an image side thereof, a first optical lens element, a second optical lens element, a third optical lens element, a fourth optical lens element, a fifth optical lens element, a sixth optical lens element, a seventh optical lens element and an eighth optical lens element. Each of the optical lens elements has an object-side surface facing the object side and an image-side surface facing the image side.

The first optical lens element is made of a glass, and the first optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The second optical lens element is made of a plastic. The third optical lens element is made of a plastic. The fourth optical lens element is made of a plastic. The fifth optical lens element is made of a plastic, and the fifth optical lens element is the long-wavelength absorbing lens element. The sixth optical lens element is made of a plastic. The seventh optical lens element is made of a plastic. The eighth optical lens element is made of a plastic.

Further, the material order of each of the optical lens elements in the optical lens assembly of the 9th design example is only for demonstration examples. To satisfy the use of the blue glass material and the long-wavelength absorbing material, the material of the optical lens element can be replaced and adjusted with the plastic or the glass.

Table 12 shows the parameters of the optical lens assembly of the 9th design example, wherein L1 to L8 respectively represent the first optical lens element to the eighth optical lens element.

| Table 12 | | | | | | | | |
|---|---|---|---|---|---|---|---|---|
| | L1 | L2 | L3 | L4 | L5 | L6 | L7 | L8 |
| CPmax (mm) | 1.45 | 0.43 | 0.82 | 0.49 | 0.56 | 0.46 | 1.03 | 1.72 |
| CPmin (mm) | 1.16 | 0.33 | 0.68 | 0.40 | 0.53 | 0.39 | 0.47 | 0.64 |
| CPavg (mm) | 1.37 | 0.36 | 0.73 | 0.43 | 0.55 | 0.43 | 0.68 | 1.27 |
| CPst | 0.084 | 0.030 | 0.044 | 0.028 | 0.008 | 0.022 | 0.206 | 0.383 |
| N | 1.62 | 1.64 | 1.54 | 1.69 | 1.54 | 1.59 | 1.56 | 1.53 |
| V | 63.41 | 23.49 | 55.98 | 18.38 | 55.98 | 28.30 | 44.62 | 55.96 |
| CT (mm) | 1.45 | 0.33 | 0.68 | 0.40 | 0.54 | 0.44 | 1.03 | 0.64 |
| R1 (mm) | 3.68 | 8.58 | 9.93 | 200.00 | -25.97 | 9.81 | 20.25 | -7.48 |
| YR1 (mm) | 2.78 | 2.55 | 2.24 | 2.03 | 2.73 | 3.11 | 3.89 | 5.40 |
| SAGR1 (mm) | 1.24 | 0.35 | 0.32 | -0.36 | -0.24 | -1.08 | -1.55 | -1.59 |
| R2 (mm) | 14.54 | 4.67 | 15.43 | 24.36 | -15.76 | 8.31 | -2.89 | 2.93 |
| YR2(mm) | 2.62 | 2.34 | 2.03 | 2.38 | 2.95 | 3.60 | 4.25 | 5.70 |
| SAGR2 (mm) | 0.26 | 0.55 | 0.14 | -0.40 | -0.41 | -1.12 | -2.22 | -1.69 |
| F (mm) | 9.83 | | | | | | | |
| FOV (degrees) | 78.10 | | | | | | | |
| TD (mm) | 8.27 | | | | | | | |
| ImgH (mm) | 8.17 | | | | | | | |
| Fb1 = CPmax/CPmin | 1.25 | 1.30 | 1.20 | 1.22 | 1.07 | 1.17 | 2.20 | 2.69 |

(continued)

| Table 12 | | | | | | | | |
|---|---|---|---|---|---|---|---|---|
| | L1 | L2 | L3 | L4 | L5 | L6 | L7 | L8 |
| Fb2 = (CPmax-CPmin)/CT | 0.20 | 0.30 | 0.20 | 0.22 | 0.06 | 0.15 | 0.55 | 1.69 |
| Fb3 = CPavg/CT | 0.94 | 1.10 | 1.07 | 1.08 | 1.01 | 0.99 | 0.66 | 1.98 |
| Fb4 = CPst/CT | 0.06 | 0.09 | 0.06 | 0.07 | 0.02 | 0.05 | 0.20 | 0.60 |
| Fb5 = CTITD | 0.176 | 0.040 | 0.082 | 0.048 | 0.066 | 0.053 | 0.125 | 0.077 |
| Arranging evaluation of blue glass | b | - | b | - | b | b | b | b |
| $FB = LOG(1/(|Fb1-1|\times |Fb3-1|\times Fb2\times Fb4))$ | 3.79 | 3.11 | 3.71 | 3.53 | 6.04 | 4.83 | 1.35 | -0.22 |
| $FA = LOG(1/(|(CPavg/CT-1)x CPst/CT)|)$ | 2.49 | 2.07 | 2.32 | 2.23 | 3.66 | 3.22 | 1.17 | 0.23 |
| Arranging evaluation of long-wavelength absorption | a | a | a | a | a | a | a | - |
| Fam = V/N | 39.17 | 14.34 | 36.26 | 10.90 | 36.26 | 17.83 | 28.57 | 36.48 |
| CTB/CTA | 2.68 | | | | | | | |
| $FcR1 = |YR1/SAGR1|\times CT/TD\times 10$ | 3.92 | 2.90 | 5.82 | 2.75 | 7.57 | 1.52 | 3.14 | 2.62 |
| Arranging evaluation of long-wavelength filtration | - | - | c | - | c | - | - | - |
| $FcR2 = |YR2/SAGR2|\times CT/TD\times 10$ | 17.74 | 1.69 | 11.91 | 2.86 | 4.71 | 1.70 | 2.39 | 2.61 |
| Arranging evaluation of long-wavelength filtration | c | - | c | - | - | - | - | - |
| $FbcR1 = |YR1/SAGR1|\times CPavg/CT$ | 2.11 | 7.98 | 7.59 | 6.19 | 11.69 | 2.84 | 1.66 | 6.70 |
| $FbcR2 = |YR2/SAGR2|\times CPavq/CT$ | 9.54 | 4.65 | 15.53 | 6.43 | 7.27 | 3.18 | 1.26 | 6.66 |
| F/TD | 1.19 | | | | | | | |
| F/ImgH | 1.20 | | | | | | | |
| TD/ImgH | 1.01 | | | | | | | |

<10th design example>

The optical lens assembly of the 10th design example includes nine optical lens elements, and the nine optical lens elements are, in order from an object side of the optical lens assembly to an image side thereof, a first optical lens element, a second optical lens element, a third optical lens element, a fourth optical lens element, a fifth optical lens element, a sixth optical lens element, a seventh optical lens element, an eighth optical lens element and a ninth optical lens element. Each of the optical lens elements has an object-side surface facing the object side and an image-side surface facing the image side.

The first optical lens element is made of a glass. The second optical lens element is made of a glass. The third optical lens element is made of a plastic. The fourth optical lens element is made of a plastic, and the fourth optical lens element is the long-wavelength absorbing lens element. The fifth optical lens element is made of a glass, and the fifth optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The sixth optical lens element is made of a plastic. The seventh optical lens element is made of a plastic. The eighth optical lens element is made of a plastic. The ninth optical lens element is made of a plastic.

Further, the material order of each of the optical lens elements in the optical lens assembly of the 10th design example is only for demonstration examples. To satisfy the use of the blue glass material and the long-wavelength absorbing material, the material of the optical lens element can be replaced and adjusted with the plastic or the glass.

EP 4 589 347 A1

Table 13 shows the parameters of the optical lens assembly of the 10th design example, wherein L1 to L9 respectively represent the first optical lens element to the ninth optical lens element.

| Table 13 | | | | | | | | | |
|---|---|---|---|---|---|---|---|---|---|
| | L1 | L2 | L3 | L4 | L5 | L6 | L7 | L8 | L9 |
| CPmax (mm) | 3.27 | 1.70 | 1.44 | 1.35 | 1.62 | 0.40 | 1.47 | 0.83 | 1.68 |
| CPmin (mm) | 1.05 | 0.70 | 1.41 | 1.24 | 1.58 | 0.36 | 1.40 | 0.54 | 1.60 |
| CPavg (mm) | 1.84 | 1.05 | 1.43 | 1.29 | 1.61 | 0.37 | 1.45 | 0.64 | 1.63 |
| CPst | 0.688 | 0.307 | 0.010 | 0.034 | 0.012 | 0.011 | 0.021 | 0.087 | 0.028 |
| N | 1.83 | 1.76 | 1.64 | 1.54 | 1.59 | 1.64 | 1.54 | 1.64 | 1.54 |
| V | 42.73 | 52.34 | 23.49 | 55.98 | 61.25 | 23.49 | 55.98 | 23.49 | 55.98 |
| CT (mm) | 1.05 | 0.70 | 1.44 | 1.24 | 1.62 | 0.36 | 1.47 | 0.54 | 1.60 |
| R1 (mm) | 11.74 | 16.77 | -14.02 | -3.40 | 2.95 | 6.63 | 3.64 | -1.97 | 3.65 |
| YR1 (mm) | 7.17 | 3.65 | 2.32 | 2.25 | 1.93 | 1.08 | 1.20 | 1.42 | 2.01 |
| SAGR1 (mm) | 2.45 | 0.40 | -0.47 | -0.69 | 0.65 | 0.10 | 0.17 | -0.59 | 0.23 |
| R2 (mm) | 4.23 | 2.98 | -4.79 | -4.50 | -12.15 | 2.59 | -1.95 | 18.35 | 7.65 |
| YR2 (mm) | 3.97 | 2.42 | 2.29 | 2.36 | 1.53 | 1.13 | 1.43 | 1.72 | 2.63 |
| SAGR2 (mm) | 2.79 | 1.24 | -0.57 | -0.76 | -0.05 | 0.24 | -0.67 | 0.07 | 0.01 |
| F (mm) | 1.78 | | | | | | | | |
| FOV (degrees) | 199.82 | | | | | | | | |
| TD (mm) | 15.57 | | | | | | | | |
| ImqH (mm) | 3.07 | | | | | | | | |
| Fb1 = CPmax/CPmin | 3.11 | 2.43 | 1.02 | 1.08 | 1.03 | 1.10 | 1.05 | 1.53 | 1.05 |
| Fb2 = (CPmax-CPmin)/CT | 2.11 | 1.43 | 0.02 | 0.08 | 0.03 | 0.10 | 0.05 | 0.53 | 0.05 |
| Fb3 = CPavg/CT | 1.76 | 1.50 | 0.99 | 1.04 | 0.99 | 1.03 | 0.99 | 1.18 | 1.02 |
| Fb4 = CPst/CT | 0.66 | 0.44 | 0.01 | 0.03 | 0.01 | 0.03 | 0.01 | 0.16 | 0.02 |
| Fb5 = CT/TD | 0.067 | 0.045 | 0.093 | 0.080 | 0.104 | 0.023 | 0.094 | 0.035 | 0.103 |
| Arranging evaluation of blue glass | b | - | b | b | b | - | b | - | b |
| FB = LOG(1/(\|Fb1-1\|× \| Fb3-1\|×Fb2×Fb4)) | -0.34 | 0.35 | 7.57 | 5.17 | 7.46 | 5.42 | 6.25 | 2.08 | 6.05 |
| FA = LOG(1/(\| (CPavg/CT-1)× CPst/CT)\|) | 0.30 | 0.66 | 4.17 | 3.01 | 4.31 | 3.00 | 3.67 | 1.54 | 3.41 |
| Arranging evaluation of long-wavelength absorption | - | a | a | a | a | a | a | a | a |
| Fam = V/N | 23.29 | 29.82 | 14.34 | 36.26 | 38.54 | 14.34 | 36.26 | 14.34 | 36.26 |
| CTBICTA | 1.30 | | | | | | | | |
| FcR1 = \|YR1/SAGR1\|× CT/TD×10 | 1.98 | 4.08 | 4.54 | 2.61 | 3.08 | 2.56 | 6.65 | 0.85 | 8.96 |
| Arranging evaluation of long-wavelength filtration | - | - | - | - | - | - | c | | c |

(continued)

| Table 13 | | | | | | | | | |
|---|---|---|---|---|---|---|---|---|---|
| | L1 | L2 | L3 | L4 | L5 | L6 | L7 | L8 | L9 |
| FcR2 = \|YR2/SAGR2\|× CT/TD×10 | 0.96 | 0.88 | 3.72 | 2.49 | 32.09 | 1.07 | 2.01 | 8.47 | 236.70 |
| Arranging evaluation of long-wavelength filtration | - | - | - | - | c | - | - | c | c |
| FbcR1 = \|YR1/SAGR1\|× CPavg/CT | 5.15 | 13.59 | 4.85 | 3.38 | 2.94 | 11.42 | 6.94 | 2.87 | 8.92 |
| FbcR2 = \|YR2/SAGR2\|× CPavg/CT | 2.50 | 2.92 | 3.97 | 3.23 | 30.57 | 4.79 | 2.09 | 28.63 | 235.71 |
| F/TD | 0.11 | | | | | | | | |
| F/ImgH | 0.58 | | | | | | | | |
| TD/lmgH | 5.07 | | | | | | | | |

<11th design example>

The optical lens assembly of the 11th design example includes seven optical lens elements, and the seven optical lens elements are, in order from an object side of the optical lens assembly to an image side thereof, a first optical lens element, a second optical lens element, a third optical lens element, a fourth optical lens element, a fifth optical lens element, a sixth optical lens element and a seventh optical lens element. Each of the optical lens elements has an object-side surface facing the object side and an image-side surface facing the image side.

The first optical lens element is made of a glass. The second optical lens element is made of a glass, and the second optical lens element is the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The third optical lens element is made of a glass, and the third optical lens element is the blue-glass lens element. The fourth optical lens element is made of a glass. The fifth optical lens element is made of a glass, and the fifth optical lens element is the long-wavelength absorbing lens element. The sixth optical lens element is made of a glass. The seventh optical lens element is made of a glass.

Further, the material order of each of the optical lens elements in the optical lens assembly of the 11th design example is only for demonstration examples. To satisfy the use of the blue glass material and the long-wavelength absorbing material, the material of the optical lens element can be replaced and adjusted with the plastic or the glass.

Table 14 shows the parameters of the optical lens assembly of the 11th design example, wherein L1 to L7 respectively represent the first optical lens element to the seventh optical lens element.

| Table 14 | | | | | | | |
|---|---|---|---|---|---|---|---|
| | L1 | L2 | L3 | L4 | L5 | L6 | L7 |
| CPmax (mm) | 1.35 | 1.99 | 2.48 | 0.89 | 4.20 | 2.77 | 4.44 |
| CPmin (mm) | 1.00 | 1.91 | 2.40 | 0.80 | 4.08 | 2.41 | 4.07 |
| CPavg (mm) | 1.12 | 1.96 | 2.43 | 0.83 | 4.16 | 2.65 | 4.20 |
| CPst | 0.11 | 0.02 | 0.02 | 0.03 | 0.04 | 0.11 | 0.11 |
| N | 1.52 | 1.85 | 1.59 | 1.76 | 1.62 | 1.69 | 1.60 |
| V | 64.21 | 32.31 | 61.25 | 27.55 | 63.41 | 53.20 | 38.01 |
| CT (mm) | 1.00 | 1.99 | 2.40 | 0.80 | 4.20 | 2.77 | 4.07 |
| R1 (mm) | 100.00 | 10.25 | -42.77 | -7.83 | 15.84 | 12.93 | 15.35 |
| YR1 (mm) | 5.55 | 4.65 | 3.99 | 3.29 | 3.95 | 5.45 | 5.10 |

(continued)

| Table 14 | | | | | | | |
|---|---|---|---|---|---|---|---|
| | L1 | L2 | L3 | L4 | L5 | L6 | L7 |
| SAGR1 (mm) | 0.15 | 1.11 | -0.25 | -0.73 | 0.50 | 1.09 | 0.87 |
| R2 (mm) | 8.02 | 33.64 | -13.76 | 15.84 | -8.64 | -20.69 | 6.10 |
| YR2(mm) | 4.81 | 4.32 | 3.59 | 3.95 | 4.81 | 5.44 | 3.99 |
| SAGR2 (mm) | 1.60 | 0.28 | -0.49 | 0.50 | -1.46 | -0.67 | 1.48 |
| F (mm) | 10.40 | | | | | | |
| FOV (degrees) | 48.91 | | | | | | |
| TD (mm) | 22.96 | | | | | | |
| ImgH (mm) | 4.63 | | | | | | |
| Fb1 = CPmax/CPmin | 1.35 | 1.04 | 1.03 | 1.12 | 1.03 | 1.15 | 1.09 |
| Fb2 = (CPmax-CPmin)/CT | 0.35 | 0.04 | 0.03 | 0.12 | 0.03 | 0.13 | 0.09 |
| Fb3 = CPavcg/CT | 1.12 | 0.99 | 1.01 | 1.04 | 0.99 | 0.96 | 1.03 |
| Fb4 = CPst/CT | 0.11 | 0.01 | 0.01 | 0.04 | 0.01 | 0.04 | 0.03 |
| Fb5 = CT/TD | 0.044 | 0.087 | 0.105 | 0.035 | 0.183 | 0.121 | 0.177 |
| Arranging evaluation of blue glass | - | b | b | - | b | b | b |
| FB = LOG(1/(\|Fb1-1\|× \|Fb3-1\|×Fb2×Fb4)) | 2.77 | 6.64 | 6.92 | 4.70 | 7.09 | 4.48 | 5.17 |
| FA = | 1.87 | 3.82 | 3.94 | 2.84 | 4.04 | 2.77 | 3.07 |
| LOG(1/(\|(CPavg/CT-1)x CPst/CT)\|) | | | | | | | |
| Arranging evaluation of long-wavelength absorption | a | a | a | a | a | a | a |
| Fam = VIN | 42.33 | 17.46 | 38.54 | 15.69 | 39.19 | 31.41 | 23.70 |
| CTB/CTA | 0.57 | | | | | | |
| FcR1 = \|YR1/SAGR1\|× CT/TD×10 | 15.67 | 3.62 | 16.59 | 1.58 | 14.45 | 6.01 | 10.38 |
| Arranging evaluation of long-wavelength filtration | c | - | c | - | c | c | c |
| FcR2 = \|YR2/SAGR2\|× CT/TD×10 | 1.31 | 13.44 | 7.64 | 2.75 | 6.02 | 9.73 | 4.77 |
| Arranging evaluation of long-wavelength filtration | - | c | c | - | c | c | - |
| FbcR1 = \|YR1/SAGR1\|× CPavq/CT | 40.41 | 4.12 | 16.05 | 4.72 | 7.82 | 4.77 | 6.03 |
| FbcR2 = \|YR2/SAGR2\|x CPavq/CT | 3.38 | 15.31 | 7.39 | 8.22 | 3.26 | 7.72 | 2.77 |
| FITD | 0.45 | | | | | | |
| F/ImgH | 2.25 | | | | | | |
| TD/ImgH | 4.96 | | | | | | |

<12th design example>

The optical lens assembly of the 12th design example includes eight optical lens elements, and the eight optical lens elements are, in order from an object side of the optical lens assembly to an image side thereof, a first optical lens element, a second optical lens element, a third optical lens element, a fourth optical lens element, a fifth optical lens element, a sixth optical lens element, a seventh optical lens element and an eighth optical lens element. Each of the optical lens elements has an object-side surface facing the object side and an image-side surface facing the image side.

The first optical lens element is made of a glass. The second optical lens element is made of a glass. The third optical lens element is made of a glass. The fourth optical lens element is made of a glass. The fifth optical lens element is made of a glass, and the fifth optical lens element is the blue-glass lens element and the long-wavelength filtering lens element, wherein the long-wavelength filtering lens element includes a long-wavelength filtering coating membrane, and the long-wavelength filtering coating membrane is disposed on an object-side surface of the long-wavelength filtering lens element. The sixth optical lens element is made of a glass, and the sixth optical lens element is the long-wavelength absorbing lens element. The seventh optical lens element is made of a glass. The eighth optical lens element is made of a glass.

Further, the material order of each of the optical lens elements in the optical lens assembly of the 12th design example is only for demonstration examples. To satisfy the use of the blue glass material and the long-wavelength absorbing material, the material of the optical lens element can be replaced and adjusted with the plastic or the glass.

Table 15 shows the parameters of the optical lens assembly of the 12th design example, wherein L1 to L8 respectively represent the first optical lens element to the eighth optical lens element.

| Table 15 | | | | | | | | |
|---|---|---|---|---|---|---|---|---|
| | L1 | L2 | L3 | L4 | L5 | L6 | L7 | L8 |
| CPmax (mm) | 2.88 | 1.71 | 5.00 | 2.23 | 2.02 | 3.75 | 1.22 | 4.00 |
| CPmin (mm) | 1.00 | 1.07 | 4.86 | 2.16 | 1.96 | 3.62 | 0.80 | 3.54 |
| CPavg (mm) | 1.65 | 1.28 | 4.95 | 2.21 | 1.98 | 3.71 | 0.94 | 3.88 |
| CPst | 0.59 | 0.19 | 0.04 | 0.02 | 0.02 | 0.04 | 0.13 | 0.13 |
| N | 1.88 | 1.57 | 1.85 | 1.59 | 1.69 | 1.80 | 1.85 | 1.81 |
| V | 39.23 | 56.06 | 23.79 | 68.35 | 53.20 | 46.57 | 23.79 | 40.73 |
| CT (mm) | 1.00 | 1.07 | 5.00 | 2.23 | 1.96 | 3.75 | 0.80 | 4.00 |
| R1 (mm) | 17.97 | -9.27 | 23.87 | 10.03 | -1000. 00 | 10.58 | -5.88 | 8.25 |
| YR1 (mm) | 6.79 | 4.13 | 4.08 | 3.79 | 2.90 | 3.51 | 3.43 | 4.39 |
| SAGR1 (mm) | 1.33 | -0.97 | 0.35 | 0.75 | -0.04 | 0.60 | -1.10 | 1.22 |
| R2 (mm) | 4.53 | 23.87 | -27.62 | -44.78 | -15.45 | -5.88 | 7.75 | 2100.34 |
| YR2(mm) | 4.22 | 4.08 | 3.90 | 3.56 | 3.27 | 3.43 | 3.39 | 4.27 |
| SAGR2 (mm) | 2.89 | 0.35 | -0.28 | -0.14 | -0.37 | -1.10 | 0.78 | 0.14 |
| F (mm) | 4.00 | | | | | | | |
| FOV (degrees) | 139.25 | | | | | | | |
| TD (mm) | 27.37 | | | | | | | |
| ImgH (mm) | 4.63 | | | | | | | |
| Fb1 = CPmax/CPmin | 2.88 | 1.59 | 1.03 | 1.03 | 1.04 | 1.04 | 1.52 | 1.13 |
| Fb2 = (CPmax-CPmin)/CT | 1.88 | 0.59 | 0.03 | 0.03 | 0.04 | 0.03 | 0.52 | 0.12 |
| Fb3 = CPavg/CT | 1.65 | 1.20 | 0.99 | 0.99 | 1.01 | 0.99 | 1.18 | 0.97 |
| Fb4 = CPstICT | 0.59 | 0.18 | 0.01 | 0.01 | 0.01 | 0.01 | 0.16 | 0.03 |
| Fb5 = CTITD | 0.037 | 0.039 | 0.183 | 0.081 | 0.071 | 0.137 | 0.029 | 0.146 |
| Arranging evaluation of blue glass | - | - | b | b | b | b | - | b |
| FB = LOG(1/(\|Fb1-1\|× \| Fb3-1\|×Fb2×Fb4)) | -0.13 | 1.90 | 7.16 | 7.02 | 6.78 | 6.85 | 2.11 | 4.83 |
| FA = LOG(1/(\|(CPavg/CT-1)x CPst/CT)\|) | 0.42 | 1.45 | 4.10 | 4.04 | 3.88 | 3.92 | 1.54 | 3.01 |
| Arranging evaluation of long-wavelength absorption | - | a | a | a | a | a | a | a |
| Fam = V/N | 20.83 | 35.73 | 12.88 | 42.91 | 31.41 | 25.81 | 12.88 | 22.55 |
| CTB/CTA | 0.52 | | | | | | | |
| FcR1 = \|YR1/SAGR1\|× CT/TD×10 | 1.86 | 1.67 | 21.21 | 4.15 | 55.01 | 8.03 | 0.91 | 5.24 |

(continued)

| Table 15 | | | | | | | | |
|---|---|---|---|---|---|---|---|---|
| | L1 | L2 | L3 | L4 | L5 | L6 | L7 | L8 |
| Arranging evaluation of long-wavelength filtration | - | - | c | - | c | c | - | c |
| FcR2 = $\|YR2/SAGR2\| \times$ CT/TD×10 | 0.53 | 4.55 | 25.77 | 20.44 | 6.38 | 4.25 | 1.27 | 44.81 |
| Arranging evaluation of long-wavelength filtration | - | - | c | c | c | - | - | c |
| FbcR1 = $\|YR1/SAGR1\| \times$ CPavq/CT | 8.42 | 5.10 | 11.51 | 5.04 | 77.91 | 5.79 | 3.66 | 3.48 |
| FbcR2 = $\|YR2/SAGR2\| \times$ | 2.41 | 13.89 | 13.98 | 24.85 | 9.04 | 3.07 | 5.11 | 29.73 |
| CPavq/CT | | | | | | | | |
| F/TD | 0.15 | | | | | | | |
| F/ImgH | 0.86 | | | | | | | |
| TD/ImgH | 5.92 | | | | | | | |

<13th design example>

The optical lens assembly of the 13th design example includes seven optical lens elements, and the seven optical lens elements are in order from an object side of the optical lens assembly to an image side thereof, a first optical lens element, a second optical lens element, a third optical lens element, a fourth optical lens element, a fifth optical lens element, a sixth optical lens element and a seventh optical lens element. Each of the optical lens elements has an object-side surface facing the object side and an image-side surface facing the image side.

The first optical lens element is made of a glass, and the first optical lens element is the blue-glass lens element and the long-wavelength filtering lens element, wherein the long-wavelength filtering lens element includes a long-wavelength filtering coating membrane, and the long-wavelength filtering coating membrane is disposed on an image-side surface of the long-wavelength filtering lens element. The second optical lens element is made of a plastic. The third optical lens element is made of a plastic, and the third optical lens element is the long-wavelength absorbing lens element. The fourth optical lens element is made of a plastic. The fifth optical lens element is made of a plastic. The sixth optical lens element is made of a plastic. The seventh optical lens element is made of a plastic.

Further, the material order of each of the optical lens elements in the optical lens assembly of the 13th design example is only for demonstration examples. To satisfy the use of the blue glass material and the long-wavelength absorbing material, the material of the optical lens element can be replaced and adjusted with the plastic or the glass.

Table 16 shows the parameters of the optical lens assembly of the 13th design example, wherein L1 to L7 respectively represent the first optical lens element to the seventh optical lens element.

| Table 16 | | | | | | | |
|---|---|---|---|---|---|---|---|
| | L1 | L2 | L3 | L4 | L5 | L6 | L7 |
| CPmax (mm) | 1.08 | 0.39 | 0.48 | 0.32 | 0.35 | 0.61 | 1.61 |
| CPmin (mm) | 0.95 | 0.34 | 0.39 | 0.25 | 0.29 | 0.39 | 0.59 |
| CPavg (mm) | 1.00 | 0.36 | 0.46 | 0.28 | 0.29 | 0.47 | 1.18 |
| CPst | 0.042 | 0.018 | 0.024 | 0.025 | 0.013 | 0.062 | 0.359 |
| N | 1.51 | 1.67 | 1.54 | 1.67 | 1.66 | 1.53 | 1.54 |
| V | 73.05 | 19.45 | 55.98 | 19.45 | 20.40 | 55.96 | 55.98 |
| CT (mm) | 0.95 | 0.34 | 0.48 | 0.25 | 0.29 | 0.55 | 0.59 |
| R1 (mm) | 2.33 | 20.20 | -46.43 | -9.05 | 8.43 | 3.90 | -1.85 |
| YR1 (mm) | 1.52 | 1.41 | 1.34 | 1.60 | 2.00 | 3.15 | 4.32 |

(continued)

| Table 16 | | | | | | | |
|---|---|---|---|---|---|---|---|
| | L1 | L2 | L3 | L4 | L5 | L6 | L7 |
| SAGR1 (mm) | 0.52 | 0.10 | -0.15 | -0.31 | -0.58 | -0.60 | -1.85 |
| R2 (mm) | 6.52 | 15.75 | -9.54 | -31.58 | 7.53 | 49.38 | -16.02 |
| YR2(mm) | 1.44 | 1.31 | 1.52 | 1.81 | 2.33 | 3.49 | 4.72 |
| SAGR2 (mm) | 0.08 | 0.13 | -0.37 | -0.30 | -0.56 | -0.70 | -1.70 |
| F (mm) | 6.00 | | | | | | |
| FOV (degrees) | 90.98 | | | | | | |
| TD (mm) | 6.37 | | | | | | |
| ImqH (mm) | 6.25 | | | | | | |
| Fb1 = CPmax/CPmin | 1.14 | 1.17 | 1.23 | 1.29 | 1.24 | 1.56 | 2.74 |
| Fb2 = (CPmax-CPmin)/CT | 0.14 | 0.17 | 0.19 | 0.29 | 0.24 | 0.39 | 1.74 |
| Fb3 = CPavcg/CT | 1.05 | 1.06 | 0.97 | 1.13 | 1.02 | 0.86 | 2.01 |
| Fb4 = CPst/CT | 0.04 | 0.05 | 0.05 | 0.10 | 0.05 | 0.11 | 0.61 |
| Fb5 = CT/TD | 0.118 | 0.042 | 0.059 | 0.031 | 0.036 | 0.069 | 0.073 |
| Arranging evaluation of blue glass | b | - | b | - | - | b | b |
| FB = LOG(1/(\|Fb1-1\|× \|Fb3-1\|×Fb2×Fb4)) | 4.35 | 4.00 | 4.18 | 2.95 | 4.19 | 2.46 | -0.27 |
| FA = | 2.62 | 2.46 | 2.82 | 1.88 | 2.95 | 1.80 | 0.21 |
| LOG(1/(\|(CPavg/CT-1)x CPst/CT)\|) | | | | | | | |
| Arranging evaluation of long-wavelength absorption | a | a | a | a | a | a | - |
| Fam = VIN | 48.34 | 11.65 | 36.26 | 11.65 | 12.29 | 36.48 | 36.26 |
| CTB/CTA | 2.00 | | | | | | |
| FcR1 = \|YR1/SAGR1\|× CT/TD×10 | 3.48 | 5.69 | 5.30 | 1.58 | 1.24 | 3.62 | 1.71 |
| Arranging evaluation of lonq-wavelenqth filtration | - | c | c | - | - | - | - |
| FcR2 = \|YR2/SAGR2\|× CT/TD×10 | 20.30 | 4.27 | 2.42 | 1.90 | 1.48 | 3.42 | 2.03 |
| Arranging evaluation of lonq-wavelenqth filtration | c | - | - | - | - | - | - |
| FbcR1 = \|YR1/SAGR1\|× CPavg/CT | 3.09 | 14.50 | 8.66 | 5.74 | 3.56 | 4.53 | 4.71 |
| FbcR2 = \|YR2/SAGR2\|x CPavg/CT | 18.07 | 10.86 | 3.96 | 6.90 | 4.25 | 4.28 | 5.58 |
| FITD | 0.94 | | | | | | |
| F/ImgH | 0.96 | | | | | | |
| TD/ImgH | 1.02 | | | | | | |

**Claims**

1. An optical lens assembly, **characterized in** comprising:

   at least four optical lens elements comprising, in order from an object side of the optical lens assembly to an image side thereof, a first optical lens element, a second optical lens element, a third optical lens element and a fourth optical lens element;
   wherein the at least four optical lens elements comprise a blue-glass lens element, a first arranging factor of the blue-glass lens element is Fb1, a fifth arranging factor of the blue-glass lens element is Fb5, and the following conditions are satisfied:

$$Fb1 \leq 1.50;$$

and

$$0.08 \leq Fb5 \leq 0.30.$$

2. The optical lens assembly of claim 1, wherein a second arranging factor of the blue-glass lens element is Fb2, and the following condition is satisfied:

$$Fb2 \leq 0.30.$$

3. The optical lens assembly of claims 1 or 2, wherein a third arranging factor of the blue-glass lens element is Fb3, and the following condition is satisfied:

$$0.50 \leq Fb3 \leq 2.00.$$

4. The optical lens assembly of any one of claims 1 to 3, wherein a fourth arranging factor of the blue-glass lens element is Fb4, and the following condition is satisfied:

$$Fb4 \leq 0.10.$$

5. The optical lens assembly of any one of claims 1 to 4, wherein an Abbe number of each of the at least four optical lens elements is V, and the blue-glass lens element satisfies the following condition:

$$20.00 \leq V.$$

6. The optical lens assembly of any one of claims 1 to 5, wherein a comprehensive arranging factor of the blue-glass lens element is FB, and the following condition is satisfied:

$$0 < FB.$$

7. The optical lens assembly of any one of claims 1 to 6, wherein a wavelength at 50% transmittance of the optical lens assembly is Wt50, and the following condition is satisfied:

$$600 \text{ nm} \leq Wt50 \leq 700 \text{ nm}.$$

8. The optical lens assembly of any one of claims 1 to 7, wherein the at least four optical lens elements comprise a long-wavelength absorbing lens element.

9. The optical lens assembly of any one of claims 1 to 8, wherein a main arranging factor of the long-wavelength absorbing lens element is FA, and the following condition is satisfied:

$$0.50 \leq FA.$$

10. The optical lens assembly of any one of claims 1 to 9, wherein a material arranging factor of the long-wavelength absorbing lens element is Fam, and the following condition is satisfied:

$$20.00 \leq Fam \leq 50.00.$$

11. The optical lens assembly of any one of claims 1 to 10, wherein a central thickness along an optical axis of the blue-glass lens element is CTB, a central thickness along the optical axis of the long-wavelength absorbing lens element is CTA, and the following condition is satisfied:

$$1.00 \le CTB/CTA.$$

12. The optical lens assembly of any one of claims 1 to 11, wherein an average transmittance in a wavelength range of 600 nm - 650 nm of the optical lens assembly is T6065, and the following condition is satisfied:

$$T6065 \le 60.00\%.$$

13. The optical lens assembly of any one of claims 1 to 12, wherein an average transmittance in a wavelength range of 650 nm - 700 nm of the optical lens assembly is T6570, and the following condition is satisfied:

$$T6570 \le 30.00\%.$$

14. The optical lens assembly of any one of claims 1 to 13, wherein an average transmittance in a wavelength range of 700 nm - 1050 nm of the optical lens assembly is T70105, and the following condition is satisfied:

$$T70105 \le 10.00\%.$$

15. The optical lens assembly of any one of claims 1 to 14, wherein a transmittance at a wavelength of 850 nm of the optical lens assembly is T85, and the following condition is satisfied:

$$T85 \le 10.00\%.$$

16. The optical lens assembly of any one of claims 1 to 15, wherein a transmittance at a wavelength of 940 nm of the optical lens assembly is T94, and the following condition is satisfied:

$$T94 \le 10.00\%.$$

17. The optical lens assembly of any one of claims 1 to 16, wherein a transmittance at a wavelength of 1050 nm of the optical lens assembly is T105, and the following condition is satisfied:

$$T105 \le 10.00\%.$$

18. The optical lens assembly of any one of claims 1 to 17, wherein,

the at least four optical lens elements comprise a long-wavelength filtering lens element, and the long-wavelength filtering lens element comprises a long-wavelength filtering coating membrane; and
the long-wavelength filtering coating membrane comprises at least one low refractive index layer and at least one high refractive index layer, and the long-wavelength filtering coating membrane is formed by alternately stacking the at least one high refractive index layer and the at least one low refractive index layer.

19. The optical lens assembly of any one of claims 1 to 18, wherein a coating arranging factor of an object-side surface of the long-wavelength filtering lens element is FcR1, a coating arranging factor of an image-side surface of the long-wavelength filtering lens element is FcR2, and the following conditions are satisfied:

$$5.00 \le FcR1;$$

or

$$5.00 \le FcR2.$$

20. The optical lens assembly of any one of claims 1 to 19, wherein the blue-glass lens element and the long-wavelength filtering lens element are the same one of the optical lens elements, a merge arranging factor of an object-side surface of the blue-glass lens element is FbcR1, a merge arranging factor of an image-side surface of the blue-glass lens element is FbcR2, and the following conditions are satisfied:

$$4.00 \leq FbcR1; \text{ or}$$

$$4.00 \leq FbcR2.$$

21. The optical lens assembly of any one of claims 1 to 20, wherein a total number of layers of the long-wavelength filtering coating membrane is tLs, and the following condition is satisfied:

$$tLs \leq 80.$$

22. The optical lens assembly of any one of claims 1 to 21, wherein a total thickness of the long-wavelength filtering coating membrane is tTk, and the following condition is satisfied:

$$3000 \text{ nm} \leq tTk \leq 10000 \text{ nm}.$$

23. The optical lens assembly of any one of claims 1 to 22, wherein a total thickness of the high refractive index layer is HtTk, a total thickness of the low refractive index layer is LtTk, and the following condition is satisfied:

$$1.00 \leq LtTk/HtTk \leq 2.00.$$

24. The optical lens assembly of any one of claims 1 to 23, wherein a refractive index of the high refractive index layer is NH, a refractive index of the low refractive index layer is NL, and the following condition is satisfied:

$$0.50 \leq NH-NL.$$

25. An electronic device, **characterized in** comprising:
    the optical lens assembly of any one of claims 1 to 24.

26. An optical lens assembly, **characterized in** comprising:

    at least four optical lens elements comprising, in order from an object side of the optical lens assembly to an image side thereof, a first optical lens element, a second optical lens element, a third optical lens element and a fourth optical lens element;
    wherein the at least four optical lens elements comprise a blue-glass lens element, a fifth arranging factor of the blue-glass lens element is Fb5, a comprehensive arranging factor of the blue-glass lens element is FB, and the following conditions are satisfied:

$$0.05 \leq Fb5 \leq 0.40;$$

    and

$$0.50 \leq FB.$$

27. The optical lens assembly of claim 26, wherein an axial distance between an object-side surface of the first optical lens element and an image-side surface of a last one of the optical lens elements is TD, a maximum image height of the optical lens assembly is ImgH, and the following condition is satisfied:

$$0 < TD/ImgH \leq 2.00.$$

28. The optical lens assembly of claims 26 or 27, wherein a first arranging factor of the blue-glass lens element is Fb1, and the following condition is satisfied:

$$Fb1 \leq 1.40.$$

29. The optical lens assembly of any one of claims 26 to 28, wherein a second arranging factor of the blue-glass lens element is Fb2, and the following condition is satisfied:

$$Fb2 \leq 0.25.$$

30. The optical lens assembly of any one of claims 26 to 29, wherein a third arranging factor of the blue-glass lens element is Fb3, and the following condition is satisfied:

$$0.60 \leq Fb3 \leq 1.50.$$

31. The optical lens assembly of any one of claims 26 to 30, wherein a fourth arranging factor of the blue-glass lens element is Fb4, and the following condition is satisfied:

$$Fb4 \leq 0.08.$$

32. The optical lens assembly of any one of claims 26 to 31, wherein a total focal length of the optical lens assembly is F, a maximum image height of the optical lens assembly is ImgH, and the following condition is satisfied:

$$2.50 \leq F/ImgH \leq 4.00.$$

33. The optical lens assembly of any one of claims 26 to 32, wherein, the at least four optical lens elements comprise a long-wavelength filtering lens element, and the long-wavelength filtering lens element comprises a long-wavelength filtering coating membrane; and
the long-wavelength filtering coating membrane comprises at least one low refractive index layer and at least one high refractive index layer, and the long-wavelength filtering coating membrane is formed by alternately stacking the at least one high refractive index layer and the at least one low refractive index layer, wherein a coating arranging factor of an object-side surface of the long-wavelength filtering lens element is FcR1, a coating arranging factor of an image-side surface of the long-wavelength filtering lens element is FcR2, and the following conditions are satisfied:

$$7.50 \leq FcR1;$$

or

$$7.50 \leq FcR2.$$

34. The optical lens assembly of any one of claims 26 to 33, wherein a maximum field of view of the optical lens assembly is FOV, and the following condition is satisfied:

$$0 \text{ degrees} < FOV \leq 50.00 \text{ degrees.}$$

35. The optical lens assembly of any one of claims 26 to 34, wherein a total focal length of the optical lens assembly is F, an axial distance between an object-side surface of the first optical lens element and an image-side surface of a last one of the optical lens elements is TD, and the following condition is satisfied:

$$0 < F/TD \leq 0.80.$$

36. The optical lens assembly of any one of claims 26 to 35, wherein the at least four optical lens elements comprise a long-wavelength absorbing lens element, a main arranging factor of the long-wavelength absorbing lens element is FA, and the following condition is satisfied:

$$2.00 \leq FA \leq 5.00.$$

37. The optical lens assembly of any one of claims 26 to 36, wherein a material arranging factor of the long-wavelength absorbing lens element is Fam, and the following condition is satisfied:

$$30.00 \leq Fam \leq 40.00.$$

38. The optical lens assembly of any one of claims 26 to 37, wherein a central thickness along an optical axis of the blue-glass lens element is CTB, a central thickness along the optical axis of the long-wavelength absorbing lens element is CTA, and the following condition is satisfied:

$$1.70 \leq CTB/CTA \leq 2.30.$$

39. The optical lens assembly of any one of claims 26 to 38, wherein a first arranging factor of the blue-glass lens element is Fb1, a second arranging factor of the blue-glass lens element is Fb2, a third arranging factor of the blue-glass lens element is Fb3, a fourth arranging factor of the blue-glass lens element is Fb4, the fifth arranging factor of the blue-glass lens element is Fb5, the comprehensive arranging factor of the blue-glass lens element is FB, the central thickness along the optical axis of the blue-glass lens element is CTB, the central thickness along the optical axis of the long-wavelength absorbing lens element is CTA, and the following conditions are satisfied:

$$1.05 \leq Fb1 \leq 1.15;$$

$$0 \leq Fb2 \leq 0.15;$$

$$0.95 \leq Fb3 \leq 1.06;$$

$$0.02 \leq Fb4 \leq 0.045;$$

$$0.115 \leq Fb5 \leq 0.12;$$

$$3.00 \leq FB \leq \infty;$$

$$1.90 \leq CTB/CTA \leq 2.10.$$

40. An electronic device, **characterized in** comprising:
the optical lens assembly of any one of claims 26 to 39.

Fig. 1

Fig. 2

Fig. 3

EP 4 589 347 A1

Europäisches
Patentamt
European
Patent Office
Office européen
des brevets

# EUROPEAN SEARCH REPORT

**Application Number**

EP 25 15 2349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/006692 A1 (YAN JUNJIE [CN]) 7 January 2021 (2021-01-07) * figure 2 * | 1-40 | INV. G02B5/22 G02B5/28 G02B13/00 |
| X | US 2014/016188 A1 (LIU HSING-YA [TW]) 16 January 2014 (2014-01-16) * paragraph [0023]; claim 7; figures 1-4 * | 1-40 | |
| X | CN 110 361 831 A (LARGAN PRECISION CO LTD) 22 October 2019 (2019-10-22) * figures 1,2 * | 1-40 | |
| A | TW 202 206 858 A (LARGAN PRECISION CO LTD [TW]) 16 February 2022 (2022-02-16) * figures 1-10 * | 1-40 | |
| A | CN 103 364 931 A (SCHOTT AG) 23 October 2013 (2013-10-23) * the whole document * | 1-40 | |
| A | CN 110 196 482 A (NANCHANG O FILM OPTICAL ELECTRONIC TECH CO LTD; O FILM JAPAN CO LTD) 3 September 2019 (2019-09-03) * figure 7 * | 1-40 | **TECHNICAL FIELDS SEARCHED (IPC)** G02B |
| A | CN 108 291 992 A (NIPPON SHEET GLASS CO LTD) 17 July 2018 (2018-07-17) * the whole document * | 1-40 | |
| A | US 2023/066022 A1 (LU CHUNG-HAN [TW] ET AL) 2 March 2023 (2023-03-02) * the whole document * | 1-40 | |

The present search report has been drawn up for all claims

| Place of search | Date of completion of the search | Examiner |
|---|---|---|
| Munich | 23 May 2025 | Daffner, Michael |

EPO FORM 1503 03.82 (P04C01)

## ANNEX TO THE EUROPEAN SEARCH REPORT
## ON EUROPEAN PATENT APPLICATION NO.

EP 25 15 2349

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2025

| Patent document cited in search report | | Publication date | Patent family member(s) | | Publication date |
|---|---|---|---|---|---|
| US 2021006692 | A1 | 07-01-2021 | CN | 210016537 U | 04-02-2020 |
| | | | JP | 2021009389 A | 28-01-2021 |
| | | | US | 2021006692 A1 | 07-01-2021 |
| | | | WO | 2021000258 A1 | 07-01-2021 |
| US 2014016188 | A1 | 16-01-2014 | TW | 201403143 A | 16-01-2014 |
| | | | US | 2014016188 A1 | 16-01-2014 |
| CN 110361831 | A | 22-10-2019 | CN | 110361831 A | 22-10-2019 |
| | | | CN | 115561880 A | 03-01-2023 |
| | | | TW | 201944102 A | 16-11-2019 |
| | | | TW | 201944116 A | 16-11-2019 |
| | | | TW | 202119065 A | 16-05-2021 |
| TW 202206858 | A | 16-02-2022 | NONE | | |
| CN 103364931 | A | 23-10-2013 | CN | 103364931 A | 23-10-2013 |
| | | | DE | 102012103076 A1 | 10-10-2013 |
| | | | JP | 2013231965 A | 14-11-2013 |
| | | | KR | 20130115146 A | 21-10-2013 |
| | | | TW | 201346323 A | 16-11-2013 |
| | | | US | 2013265478 A1 | 10-10-2013 |
| CN 110196482 | A | 03-09-2019 | CN | 110196482 A | 03-09-2019 |
| | | | EP | 3531180 A1 | 28-08-2019 |
| | | | JP | 2019148615 A | 05-09-2019 |
| | | | KR | 20190103051 A | 04-09-2019 |
| | | | TW | 201937915 A | 16-09-2019 |
| | | | US | 2019265440 A1 | 29-08-2019 |
| CN 108291992 | A | 17-07-2018 | CN | 108291992 A | 17-07-2018 |
| | | | JP | 6220107 B1 | 25-10-2017 |
| | | | JP | 6282778 B1 | 21-02-2018 |
| | | | JP | 6343378 B2 | 13-06-2018 |
| | | | JP | 6864637 B2 | 28-04-2021 |
| | | | JP | 2018018094 A | 01-02-2018 |
| | | | JP | 2018081323 A | 24-05-2018 |
| | | | JP | 2018090809 A | 14-06-2018 |
| | | | JP | WO2017183671 A1 | 26-04-2018 |
| | | | KR | 20180056758 A | 29-05-2018 |
| | | | KR | 20200030630 A | 20-03-2020 |
| | | | TW | 201800550 A | 01-01-2018 |
| | | | TW | 201831640 A | 01-09-2018 |
| | | | TW | 201920584 A | 01-06-2019 |
| | | | US | 2018275326 A1 | 27-09-2018 |
| | | | WO | 2017183671 A1 | 26-10-2017 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 15 2349

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2025

| Patent document cited in search report | Publication date | Patent family member(s) | Publication date |
|---|---|---|---|
| US 2023066022 A1 | 02-03-2023 | TW 202308955 A<br>US 2023066022 A1 | 01-03-2023<br>02-03-2023 |

For more details about this annex : see Official Journal of the European Patent Office, No. 12/82

page 2 of 2